(19) Europäisches Patentamt / European Patent Office / Office européen des brevets

(11) **EP 2 881 715 B1**

(12) **EUROPEAN PATENT SPECIFICATION**

(45) Date of publication and mention
of the grant of the patent:
**30.08.2017 Bulletin 2017/35**

(51) Int Cl.:
*G01D 18/00* (2006.01) *G01L 25/00* (2006.01)
*G01D 5/20* (2006.01) *G01D 5/244* (2006.01)
*G01D 5/245* (2006.01) *G01L 3/10* (2006.01)

(21) Application number: **14196321.5**

(22) Date of filing: **04.12.2014**

(54) **Self-calibrating position sensor**

Selbstkalibrierender Positionssensor

Capteur de position à étalonnage automatique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.12.2013 GB 201321529**

(43) Date of publication of application:
**10.06.2015 Bulletin 2015/24**

(73) Proprietors:
• **TT Electronics Technology Limited
Cambridge CB2 5GG (GB)**
• **AB Elektronik GmbH
59368 Werne (DE)**

(72) Inventors:
• **Witts, David
Cambridge, Cambridgeshire CB22 5GG (GB)**
• **Ruhl, Stefan
59368 Werne (DE)**

(74) Representative: **Spaargaren, Jerome
EIP
Fairfax House
15 Fulwood Place
London WC1V 6HU (GB)**

(56) References cited:
**WO-A1-02/16188 WO-A1-02/16881**

EP 2 881 715 B1

**Description**

This invention relates to a position sensor that outputs a signal indicative of the position of a first member relative to a second member. The invention is particularly concerned with improving the accuracy of the output signal. The invention is applicable to many different position sensing technologies, such as inductive, magnetic or capacitive technologies.

Ideally, a position sensor generates a position signal, which may either be the output of the position sensor or an intermediate signal that is processed to generate the output of the position sensor, that varies with position in a well-defined manner. For example, the amplitude of the position signal may vary linearly with position, or the amplitude of the position signal may vary sinusoidally with position, or a timing of the position signal may vary linearly with position. In all these ideal situations, the position signal varies with position in accordance with a measurement function that is characteristic of the position sensor.

In practice, however, the position signal of a position sensor varies with position in accordance with the characteristic measurement function modified by an error function. This error function has the effect of introducing inaccuracy into the way in which the position signal represents the relative position. One way of reducing this inaccuracy is to calibrate the position sensor using a reference position sensor, thereby reducing systematic error components. However, the use of such a reference position sensor adds to the cost of manufacture and installation. Further, the systematic error components are not necessarily the same in all operating conditions of the position sensor, for example the systematic error components may change with temperature, and calibrating over all possible operating conditions can require extensive and costly testing.

WO 02/16881 discusses using a reference position sensor as discussed above. In contrast, WO 02/16188 discusses self-calibration for a torsion angle corresponding to the difference between two absolute angle position readings provided by separate sensor by determining calibration data corresponding to that difference at different absolute positions when no torque is applied.

The present invention provides an alternative approach to the problem of calibrating a position sensor.

In one aspect, the present invention provides a position sensor having a first channel that produces a first position signal which varies with position in the measurement range in accordance with a first measurement function modified by a first error function, and a second channel that produces a second position signal which varies with position in the measurement range in accordance with a second measurement function modified by a second error function. The position sensor determines first calibration data by processing the first and second position signals at different positions within the measurement range, the first calibration data at least partially compensating for the first error function. The position sensor can subsequently process the first position signal, using the first measurement function and the first calibration data, to generate an output that more accurately represents position. In an embodiment the position sensor may also determine second calibration data that at least partially compensates for the second error function.

The present invention is applicable to an arrangement that utilises a Vernier-type measurement technique. In such a Vernier-type measurement technique, the position sensor has a first channel having a channel output that varies periodically over the measurement range with a first spatial frequency. The channel output of the first channel accordingly corresponds to a plurality of possible positions within the measurement range. To address this ambiguity, the position sensor has a second channel having a channel output that varies periodically over the measurement range with a second spatial frequency that is different from the first spatial frequency such that the combination of the first channel output and the second channel output corresponds to a unique position in the measurement range. In particular, the second channel output can be used to determine which of the possible positions corresponding to the first channel output is correct, and the first channel output can be used to determine which of the possible positions corresponding to the second channel output is correct. Accordingly, the first position signal is generated from the channel output of the first channel using the channel output of the second channel to resolve ambiguity, and if desired a second position signal can be generated from the channel output of the second channel using the channel output of the first channel to resolve ambiguity.

In such a position sensor using a Vernier-type measurement technique, typically the first position signal has an associated first error function with components at the first spatial frequency and harmonics thereof, while the second position signal has an associated second error function with components at the second spatial frequency and harmonics thereof. With knowledge of the first measurement function and the second measurement function, the harmonic nature of the first and second error functions enables the first and second position signals to be analysed to determine at least one of the first and second error functions. As a first example, for each actual position in the measurement range, a first position reading determined from the first position signal using the first measurement function can be compared with a second position reading determined from the second position signal using the second measurement function to determine a difference function over the measurement range that corresponds to a composite of the first error function and the second error function. This difference function may then be analysed to extract data corresponding to the first error function, and the first calibration data can then be determined from the extracted data. Similarly, data corresponding to the second error function may be extracted from the difference function and processed to determine the second calibration data. As a second example, the first error function can be determined by averaging the difference between a first position reading determined from the first position signal using the first measurement function and a second position reading determined from the second position signal using the second measurement function for each value of the first position signal, and similarly the second error function can be determined by averaging the difference between a first position reading determined from the first position signal and a second position reading determined from the second position signal for each value of the second position signal.

In an embodiment of a position sensor using the Vernier measurement technique, the output of the first channel varies generally sinusoidally with position at the first spatial frequency and the output of the second channel varies generally sinusoidally with position at the second spatial frequency. For such a position sensor, by sampling the output of the first channel each time that the output of the second channel passes a predetermined position within the period corresponding to the second spatial frequency, a sampled function is generated which may be compared to a reference function to determine the first calibration data.

The present invention is also applicable to a rotary position sensor in which the first and second channels correspond to separate detecting elements angularly offset from each other by a known amount. For such a rotary position sensor, eccentric mounting results in an error function in the reading determined by the output of a single channel, the error function varying generally sinusoidally with a period corresponding to a full revolution. However, by determining for each rotary position the difference between a first position reading determined from the output of the first channel using the first measurement function and a second position reading determined from the output of the second channel using the second measurement function, a difference function is generated which can be analysed to determine at least one of the first and second error functions.

By way of example, various embodiments of the present invention will now be described with reference to the attached figures in which:

Figure 1 schematically shows a sectional view of a coupling arrangement between a steering wheel and a gear of a rack-and-pinion type steering mechanism;

Figure 2 schematically shows the main components of a position sensor forming part of the coupling arrangement illustrated in Figure 1;

Figure 3 shows a perspective view of a sleeve member, having mounted thereon a flexible printed circuit board, forming part of the coupling arrangement illustrated in Figure 1;

Figure 4 shows a plan view of the flexible printed circuit board illustrated in Figure 3 when laid out flat;

Figure 5 shows a perspective view of a first puck wheel, having mounted thereon a flexible printed circuit board, forming part of the coupling arrangement illustrated in Figure 1;

Figure 6 shows a plan view of the first puck wheel illustrated in Figure 5;

Figure 7 shows a plan view of the flexible printed circuit board illustrated in Figure 5 when laid out flat;

Figure 8 shows a perspective view of a second puck wheel, having mounted thereon a flexible printed circuit board, forming part of the coupling arrangement illustrated in Figure 1;

Figure 9 shows a plan view of the flexible printed circuit board illustrated in Figure 8 when laid out flat;

Figure 10 schematically shows a perspective view of the positional relationship between the first and second puck wheels when mounted in the coupling arrangement illustrated in Figure 1;

Figure 11 schematically shows an exploded view of the positional relationship between the sleeve, the first puck wheel and the second puck wheel;

Figure 12 shows a perspective view of the positional relationship between the sleeve, the first puck wheel and the second puck wheel when mounted in the coupling arrangement illustrated in Figure 1;

Figure 13 schematically shows the main components of an ASIC forming part of the position sensor illustrated in Figure 11;

Figure 14 is a graph showing the relationship between a first detected phase angle and the absolute position of a first shaft forming part of the coupling arrangement illustrated in Figure 1;

Figure 15 is a graph showing the relationship between a second detected phase angle and the absolute position of the first shaft forming part of the coupling arrangement illustrated in Figure 1;

Figure 16 schematically shows the main components of a central control unit illustrated in Figure 2;

Figure 17 is a graph showing an idealised variation with position of the output of first and second channels of the position sensor illustrated in Figure 2;

Figure 18 is a graph showing an idealised variation with position of stitched outputs of the first and second channels of the position sensor illustrated in Figure 2;

Figure 19 is a graph showing the variation with position of the output of first and second channels of the position sensor illustrated in Figure 2 including harmonic error components;

Figure 20 is a graph showing the variation with position of stitched outputs of the first and second channels of the position sensor illustrated in Figure 2 including harmonic error components;

Figure 21 is a graph illustrating first and second error functions respectively associated with first and second channels of the position sensor of Figure 2;

Figure 22 is a graph showing a difference function corresponding to the difference in position readings obtained from the first and second channels of the position sensor of Figure 2;

Figure 23 schematically shows the main components of a first alternative central control unit to that illustrated in Figure 16;

Figure 24 is a graph showing error functions determined in the alternative central control unit illustrated in Figure 23;

Figure 25 schematically shows the main components of a second alternative central control unit to that illustrated in Figure 16;

Figure 26 is a graph showing output values of an ASIC as illustrated in Figure 13 sampled by an error corrector forming part of the second alternative control unit;

Figure 27 is a graph showing error values determined by the error corrector forming part of the second alternative control unit;

Figure 28 is a graph showing the generally sinusoidal variation with position of the output by alternative ASICs to those illustrated in Figure 13;

Figure 29 is a graph showing values output by the alternative ASICs sampled by a third alternative control circuit;

Figure 30 is a graph is a graph showing an error function determined from the sampled values illustrated in Figure 29;

Figure 31 is a graph showing calibration data calculated from the error function illustrated in Figure 30;

Figures 32a and 32 bare graphs respectively showing the mapping of error values to sample values with positive slope and negative slope;

Figure 33 schematically shows a rotary position sensing arrangement according to a fifth embodiment of the invention;

Figure 34 schematically shows the layout of conductive windings forming a transmit aerial and a receive aerial forming part of the sensing arrangement of Figure 33;

Figure 35 schematically shows the layout of a resonant circuit forming part of the sensing arrangement illustrated in Figure 33;

Figure 36 is a graph showing the variation of sensor output with position calculated using two different channels of the sensing arrangement of Figure 33 in comparison with an ideal linear variation of sensor output with position; and

Figure 37 is a graph showing the variation in the difference of the position values calculated by the two channels with position.

## FIRST EMBODIMENT

A first embodiment of the invention will now be described in the context of a position sensor for monitoring the torque applied by the driver of a vehicle to a steering mechanism, similar to that described in International patent publication WO 2006/126013, the whole contents of which are hereby incorporated by reference.

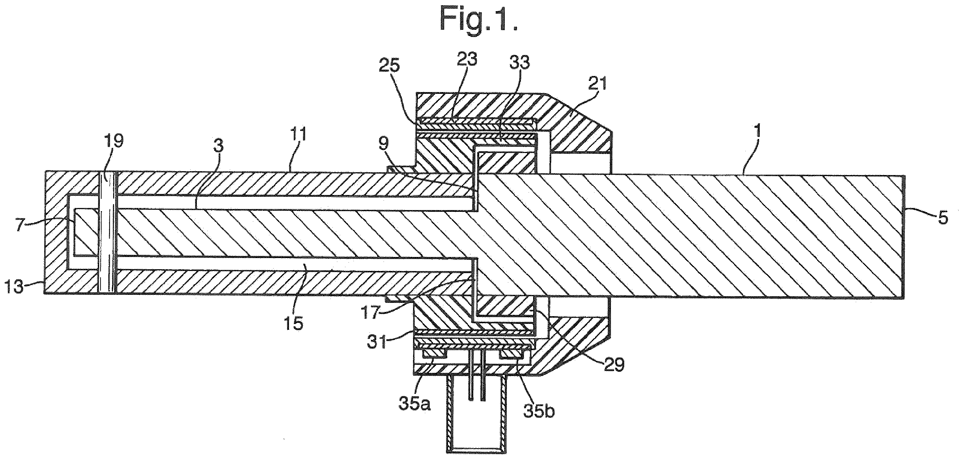

In particular, the steering wheel of a car is connected to a gear forming part of a rack-and-pinion steering mechanism. Figure 1 shows a cross-sectional view of a coupling arrangement between the steering wheel and the gear. A first elongate cylindrical shaft 1 is attached at one longitudinal end 5 to the steering wheel (not shown). As shown in Figure 1, the first shaft 1 has a reduced diameter axial portion 3 extending from the longitudinal end 7 away from the steering wheel to a stepped region 9. A second elongate cylindrical shaft 11 is attached at one longitudinal end 13 to the gear (not shown) of the rack-and-pinion steering mechanism, and has a hollow axial portion 15 extending from the longitudinal end 17 away from the gear, hereafter called the open end 17. As shown in Figure 1, the reduced diameter portion 3 of the first shaft 1 is mounted in the hollow portion 15 of the second shaft 11 with the first shaft 1 and the second shaft 11 axially aligned and the stepped region 9 of the first shaft 1 being adjacent the open end 17 of the second shaft 11. A locking pin 19 fixes the first shaft 1 to the second shaft 11 towards the end 7 of the reduced diameter portion 3.

For the remainder of the description of this embodiment, the term axial direction refers to the direction of the common longitudinal axis of the first and second shafts 1 and 11, the term radial direction refers to lines radiating perpendicularly away from the common longitudinal axis, and the term circumferential direction refers to a direction normal to both the axial direction and the radial direction.

The first shaft 1 and the second shaft 11 are mounted so as to be rotatable relative to a housing 21, so that when a driver of the car turns the steering wheel both the first shaft 1 and the second shaft 11 rotate relative to the housing 21. In particular, in this embodiment the range of rotational movement of the first and second shafts is two full revolutions, i.e. 720°, relative to the housing 21. In this embodiment, the steering mechanism is an electronic power-assisted steering mechanism in which electrical motors apply an assisting force which varies in dependence on the torque applied to the steering wheel by the driver. Accordingly, the torque applied by the driver must be monitored.

The torque applied to the steering wheel by the driver is transferred to the gear via the locking pin 19, which fixes the first shaft 1 to the second shaft 11. However, the axial distance between the locking pin 19 and the junction between the stepped region 9 of the first shaft 1 and the open end 17 of the second shaft 11 results in a relative rotary displacement between the stepped region 9 and the open end 17 which varies in dependence on the applied torque. An inductive position sensing arrangement measures the relative rotary displacement between the stepped region 9 and the open end 17, and the applied torque is calculated from the measured relative rotary displacement.

The inductive position sensing arrangement of the present invention has: an aerial member 23 which is mounted on an aerial guide 25 which is fixed relative to the housing 21; a first intermediate coupling element 27 (not shown in Figure 1) which is mounted on a first sleeve member 29 which is fixed relative to the first shaft 1; and a second intermediate coupling element 31 which is mounted on a second sleeve member 33 which is fixed relative to the second shaft 11. The aerial member 23 has formed thereon a transmit aerial (not shown in Figure 1) which generates a magnetic field which varies around the circumference of the first shaft 1 and the second shaft 11, and a receive aerial (not shown in Figure 1). The transmit aerial is balanced relative to the receive aerial so that in the absence of the first intermediate coupling element 27 and the second intermediate coupling element 31, no nett signal is induced in the receive aerial by virtue of the magnetic field generated by the transmit aerial. However, in the presence of the first intermediate coupling element 27 and the second intermediate coupling element 31, a signal is induced in the receive aerial which depends on the rotary positions of the first shaft 1 and the second shaft 11.

As will be described in more detail hereafter, in accordance with the invention the inductive position sensing arrangement has two channels. As shown in Figure 1, the inductive position sensing arrangement has two ASICs 35a, 35b, with each ASIC 35 being used by a respective different one of the two channels.

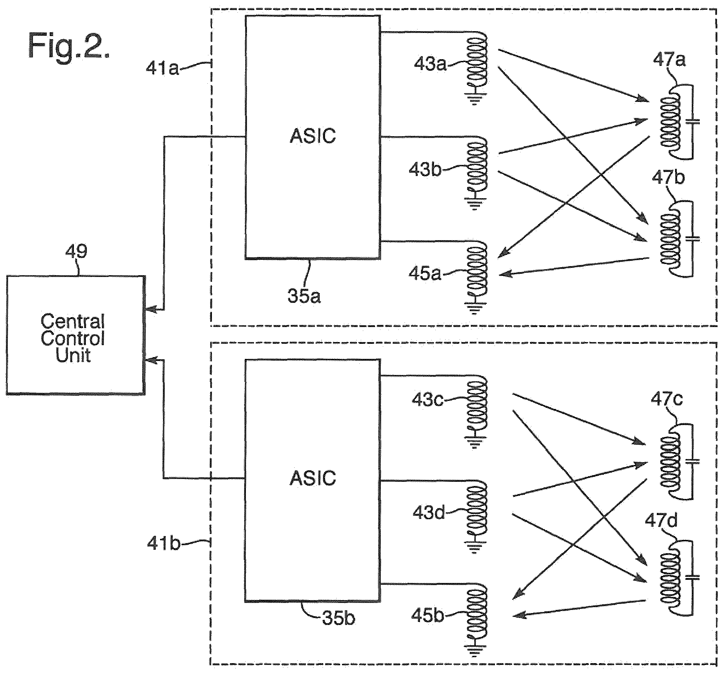

Figure 2 schematically shows the main components of the inductive position sensing arrangement. In Figure 2, the first channel 41a and the second channel 41b are schematically indicated by dashed boxes. Each channel 41 has two associated excitation windings 43 (performing the transmit aerial function for that sensing arrangement) and one sensor winding 45 (performing the receive aerial function for that sensing arrangement).

In particular, the first channel 41 has first and second excitation windings 43a and 43b and a first sensor winding 45a which are formed on the aerial member 23 and are connected to the first ASIC 35a. The channel also has a first resonant circuit 47a which is formed on the first intermediate coupling element 27 and a second resonant circuit 47b which is formed on the second intermediate coupling element 31. Similarly, the second channel 41b has third and fourth excitation windings 43c and 43d and a second sensor winding 45b which are formed on the aerial member 23 and are connected to the second ASIC 35b, a third resonant circuit 47c which is formed on the first intermediate coupling element 27 and a fourth resonant circuit 47d which is formed on the second intermediate coupling element 31.

In this embodiment, for the first channel 41a the first and second excitation windings produce radial magnetic field components which vary through twenty cycles of the sine and cosine functions respectively around a full circumference, and for the second channel the third and fourth excitation windings produce radial magnetic field components which vary through nineteen cycles of the sine and cosine functions respectively around a full circumference. The radial magnetic field components induce a signal in the first resonant circuit 47a which varies in accordance with the rotary position of the first shaft 1, and induce a signal in the second resonant circuit 47b which varies in accordance with the rotary position of the second shaft 11. The signals induced in the first and second resonant circuits 47a, 47b induce corresponding signal components in the first sensor winding 45a which are processed by the first ASIC 35a. The second channel 41b works in an analogous manner.

The ASIC 35a of the first channel outputs a first output signal, which is indicative of the rotary position of the first shaft 1 relative to the housing 21, and a second output signal, which is indicative of the rotary position of the second shaft 11 relative to the housing 21, to a central control unit 49. Similarly, the ASIC 35b of the second channel outputs a third output signal, which is indicative of the rotary position of the first shaft 1 relative to the housing 21, and a fourth output signal, which is indicative of the rotary position of the second shaft 11 relative to the housing 21, to the central control unit 49. The central control unit 49 processes the first to fourth output signals to determine (i) the absolute relative position of the first shaft 1 relative to the housing 21, (ii) the absolute relative position of the second shaft 11 relative to the housing, and (iii) the rotary position of the first shaft 1 relative to the second shaft 11 (from which the torque applied to the steering wheel can be calculated).

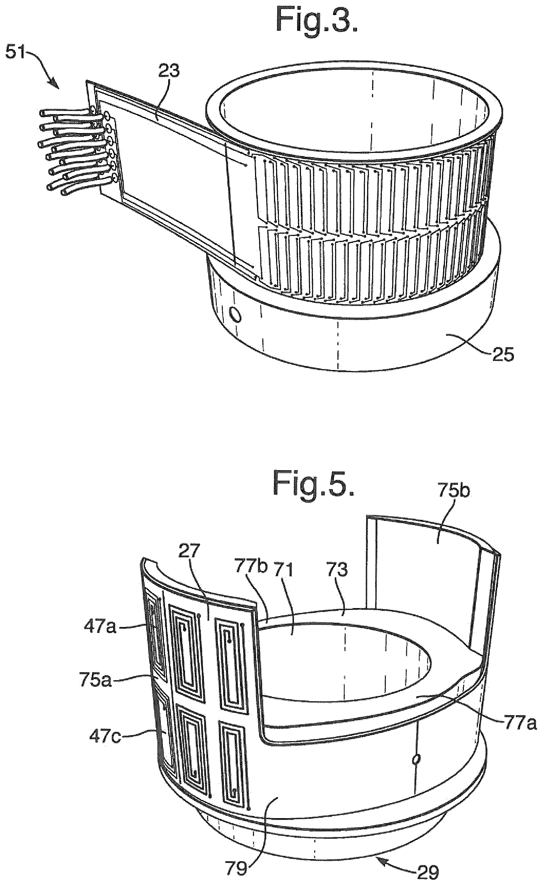

Figure 3 schematically shows a perspective view of the aerial member 23 and the aerial guide 25. As shown, the aerial guide 25 is a cylindrical sleeve having an outer surface with a recessed circumferential portion in which the aerial member 23 is fixedly mounted. In this embodiment, the aerial member 23 is a rectangular sheet of two- layer flexible printed circuit board (PCB) material having a length which is longer than the circumference of the recessed portion of the aerial guide 25. The aerial member 23 has conductive tracks deposited on either side which are connected, using via holes, to form the excitation windings 43 and the sensor windings 45. Two sets of six electrical contacts 51 are provided, with each set of six electrical contacts 51 connecting the two excitation windings and the sensor winding of a sensing arrangement with the corresponding ASIC 35.

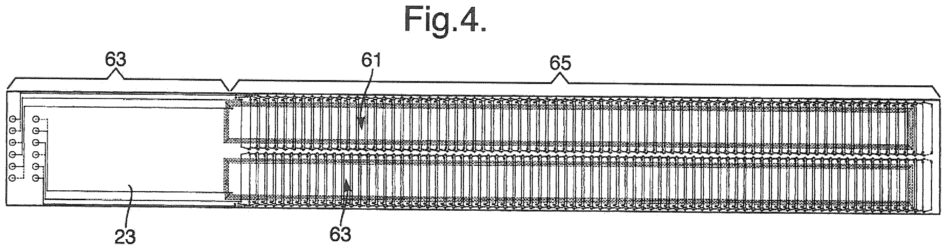

Figure 4 is a schematic plan view of the aerial member 23 when laid out flat, in which the conductive tracks formed on one side of the PCB are represented by solid lines whereas the conductive tracks formed on the other side of the PCB are represented by dashed lines. As shown in Figure 4, the conductive tracks 61 associated with the first sensing arrangement 41a are spaced apart from the conductive tracks 63 associated with the second sensing arrangement 41b in the widthwise direction of the PCB (which corresponds to the axial direction when the aerial member 23 is mounted on the aerial guide 25).

In this embodiment, the excitation windings 43 and the sensor winding 45 for each channel 41 include planar coil arrangements which extend over a length 65 of the PCB corresponding to the circumference of the recessed portion of the aerial guide 25. The excitation windings produce magnetic fields having a magnetic field component perpendicular to the PCB which varies in accordance with multiple periods of the sine function and the cosine function respectively in substantially the same manner as the excitation windings described in UK Patent Application GB 2374424A (the whole contents of which are hereby incorporated herein by reference). Further, in this embodiment the sensor winding of a channel 41 is formed by a multi-loop planar coil extending around the whole of the length 61.

Figure 5 schematically shows a perspective view of the first intermediate coupling element 27 and the first sleeve member 29. As shown, the first sleeve member 29 has a cylindrical recess 71 for receiving the first shaft 1. The first sleeve member 29 also has a guide portion 73 on which the first intermediate coupling element 27 is mounted. The guide portion 73 has two opposing arc portions 75a and 75b, which are centred on the axis of the cylindrical recess 71, and two opposing connecting portions 77a and 77b which interconnect the two arc portions 75a, 75b.

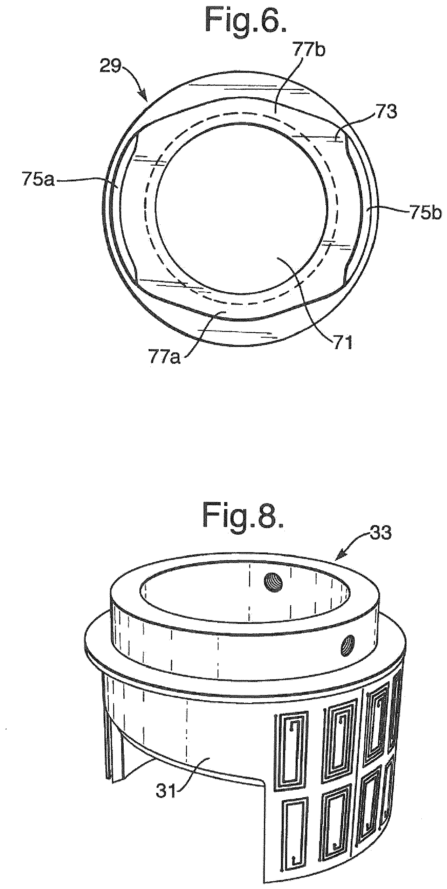

Figure 6 shows a plan view of the first sleeve member 29 (i.e. looking along the axial direction when mounted to the first shaft 1) showing the cylindrical recess 71 and the guide portion 73. As shown, the opposing arc portions 75a, 75b each extend approximately 70° around the cylindrical recess 71, and the connecting portions 77a, 77b extend inside of the circle of which the outer surfaces of the two arc portions 75 form part of the circumference.

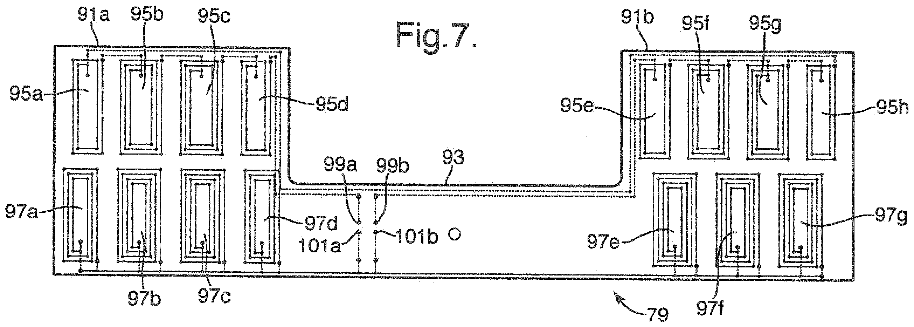

Returning to Figure 5, the two arc portions 75 include projecting parts causing the arc portions 75 to have approximately twice the axial extent of the two connecting portions 77. In this way, the side of the first sleeve member 29 including the projecting parts has a castellated appearance. The first intermediate coupling arrangement includes a two-layer flexible PCB 79 having conductive tracks deposited on either side which are interconnected by via holes to form the inductors for the first and third resonant circuits 47a, 47c. Figure 7 shows a schematic plan view of the flexible PCB 79 when laid out flat, with conductive tracks on one side of the PCB 79 being represented by solid lines and conductive tracks on the other side of the PCB 79 being represented by dashed lines.

As shown in Figure 7, the PCB 79 has two end parts 91a, 91b, whose dimensions match the dimensions of respective arc portions 75 of the guide portion 73, and a connecting part 93 which is of reduced width and interconnects the two end parts 91. The connecting part 93 separates the two end parts 91 by a distance which allows the two end parts 91 to be mounted to the outer surface of the two arc portions 75 of the guide portion 73, with the connecting part 93 itself being mounted to one of the connecting portions 77 of the guide portion 73 (as shown in Figure 4).

The inductor for the first resonant circuit 47a is formed by the serial connection of eight periodically-spaced current loop structures 95a-95h and the inductor for the third resonant circuit 47c is formed by the serial connection of seven periodically-spaced current loop structures 97a-97g. The current loop structures 95, 97 are arranged so that, when mounted to the sleeve member 29 as shown in Figure 5, the current loops 95 for the first resonant circuit 47a are spaced apart in the axial direction from the current loops 97 of the third resonant circuit 47c. In particular, the axial spacing between the current loops for the first and third resonant circuits 47a, 47c equals the axial spacing between the excitation/sensor windings for the first channel 41a and the excitation/sensor windings for the second channel 41b.

As shown in Figure 7, the current loop structures 95,97 are formed in the end parts 91 of the flexible PCB 79. Two terminals 99a and 99b are formed in the connecting part 93 of the flexible PCB 79 to which a capacitor (not shown) is mounted to form the first resonant circuit 47a with the inductor formed by the current loop structures 95, and two terminals 101a and 101b are formed in the connecting part 93 of the flexible PCB 79 to which a capacitor is mounted to form the third resonant circuit 47c with the inductor formed by the current loop structures 97. The current loop structures 95 for the first resonant circuit 47a are mounted adjacent the projecting parts of the first sleeve member 29.

In this embodiment, the first resonant circuit has a resonant frequency of 3.75MHz and the third resonant circuit has a resonant frequency of 5MHz. Further, the periodic spacing of the current loop structures 95 for the first resonant circuit 47a corresponds to an angular spacing of 18° (that is 360° divided by twenty), and the period spacing of the current loop structures 97 for the third resonant circuit 47c corresponds to an angular spacing of 18.95° (that is 360° divided by nineteen).

Figure 8 schematically shows a perspective view of the second intermediate coupling element 31 and the second sleeve member 33. As shown, the second sleeve member 33 has a substantially identical castellated shape to the first sleeve member 29.

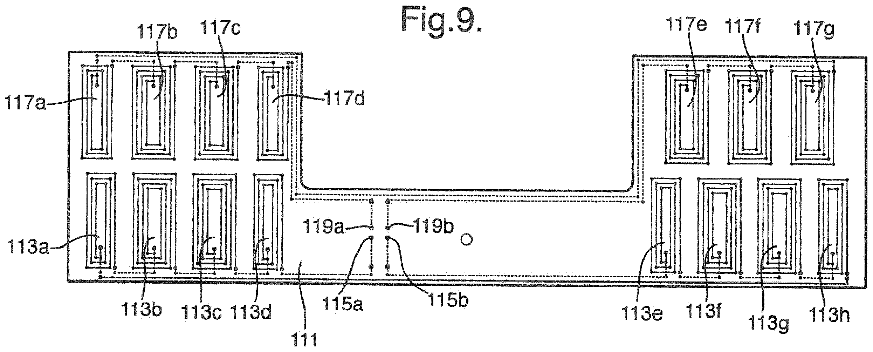

The second intermediate coupling element 31 is formed by a two-layer flexible PCB 111 in a similar manner to the first intermediate coupling element 29. Figure 9 schematically shows a plan view of the flexible PCB 111 when laid out flat with the conductive tracks on one side being represented by solid lines and the conductive tracks on the other side being represented by dashed lines. Eight current loop structures 113a to 113h in the end portions of the flexible PCB 111 are connected in series with a capacitor (not shown) connected between terminals 115a and 115b to form the second resonant circuit 47b, which in this embodiment has a resonant frequency of 1.875MHz, and seven current loop structures 117a to 117g in the end portions of the flexible PCB 111 are connected in series with a capacitor (not shown) connected between terminals 119a and 119b to form the fourth resonant circuit 47d, which in this embodiment has a resonant frequency of 2.5MHz.

The periodic spacing of the current loop structures 113 for the second resonant circuit 47b corresponds to an angular spacing of 18° (that is 360° divided by twenty), and the periodic spacing of the current loop structures 117 for the fourth resonant circuit corresponds to an angular spacing of 18.95° (that is 360° divided by nineteen). The current loop structures 117 for the fourth resonant circuit 47d are mounted adjacent the projecting parts of the second sleeve member 33.

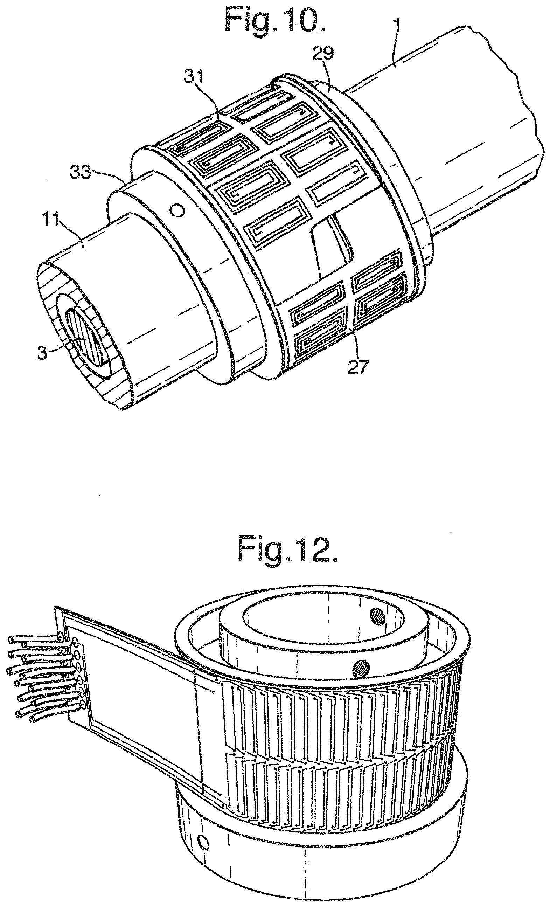

Figure 10 schematically shows a perspective view of the positional relationship between the first intermediate coupling element 27 and the second intermediate coupling element 31 when the coupling arrangement is assembled. As shown, the castellated ends of the first and second sleeve members interlock so that the projecting parts of the arc portions 75 of one sleeve member are located in the spaces adjacent the outside of the connecting portions 77 of the other sleeve member. In this way, the current loop structures of the first resonant circuit 47a are in the same position along the axial direction as the current loop structures of the second resonant circuit 47b but are spaced apart in the circumferential direction. Similarly, the current loop structures of the third resonant circuit 47c are in the same position along the axial direction as the current loop structures of the fourth resonant circuit 47d but are spaced in the circumferential direction.

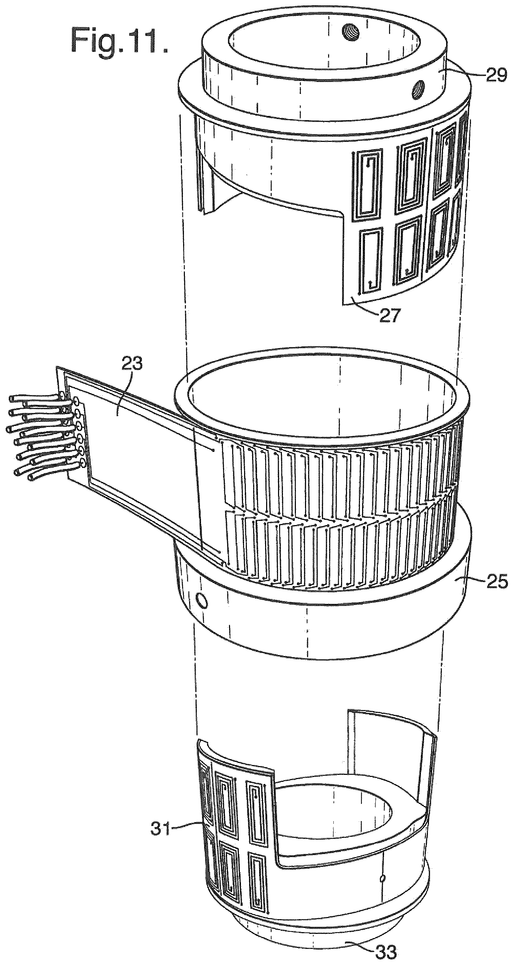

Figure 11 schematically shows an exploded view indicating how the first sleeve member 29 and the second sleeve member 31 are received in the aerial guide 25, and Figure 12 shows schematically shows the first sleeve member 29 and the second sleeve member 31 when positioned within the aerial guide 25. When assembled, the first sleeve member 29 and the second sleeve member 33 are rotatably mounted within the aerial guide 25, with the current loop structures of the first and second resonant circuits 47a, 47b located in the same position along the axial direction as the first and second excitation windings 43a, 43b and the first sensor winding 45a, and the current loop structures of the third and fourth resonant circuits 47c, 47d located in the same position along the axial direction as the third and fourth excitation windings 43c, 43d and the second sensor winding 45b.

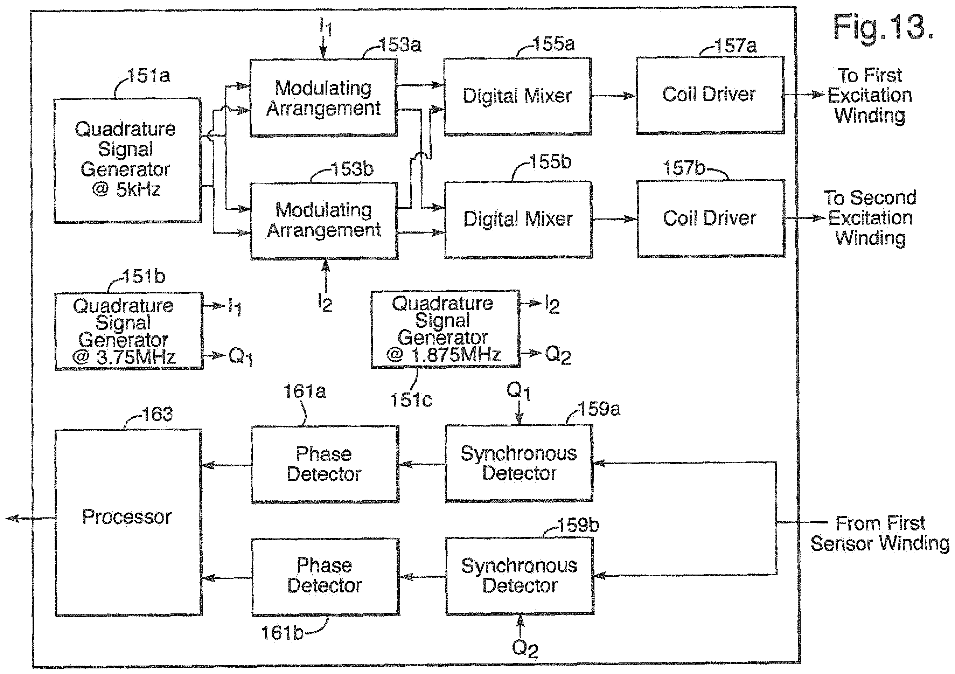

Figure 13 schematically shows the main components of the first ASIC 35a. A first quadrature signal generator 151a generates a quadrature pair of signals which in this embodiment have a frequency of 5kHz (hereafter called the modulation frequency). A second quadrature signal generator 151b generates a quadrature signal at a first carrier frequency which is equal to the resonant frequency of the first resonant circuit 47a, which in this embodiment is 3.75MHz. A third quadrature signal generator 151c generates a quadrature signal at a third carrier frequency which is equal to the resonant frequency of the second resonant circuit 47b, which in this embodiment is 1.875MHz.

The quadrature pair of signals at the modulation frequency are input to a first modulating arrangement 153a which modulates the in-phase signal $I_1$ at the modulation frequency by the in-phase signal at the first carrier frequency to generate a signal $I_1(t)$ and modulates the quadrature signal at the modulation frequency by the in-phase signal $I_1$ at the first carrier frequency to generate a signal $Q_1(t)$. The quadrature pair of signals at the modulation frequency are also input to a second modulating arrangement 153b which modulates the in-phase signal at the modulation frequency by the in-phase signal $I_2$ at the second carrier frequency to generate a signal $I_2(t)$ and modulates the quadrature signal at the modulation frequency by the in-phase signal $I_2$ at the second carrier frequency to generate a signal $Q_2(t)$.

The signals $I_1(t)$ and $I_2(t)$ are then input into a first digital mixer 155a which combines the signals $I_1(t)$ and $I_2(t)$, and the resultant combined signal is amplified by a first coil driver 157a. The amplified signal output by the first coil driver 157a is supplied to the first excitation winding 43a. The signals $Q_1(t)$ and $Q_2(t)$ are input to a second digital mixer 155b and the resultant combined signal is amplified by a second coil driver 157b and supplied to the second excitation winding 43b.

The signal components supplied to the first and second excitation windings 43a, 43b at around the first carrier frequency induce a resonant signal in the first resonant circuit 47a which varies in accordance with the radial position of the first shaft 1. The resonant signal induced in the first resonant circuit 47a in turn induces a signal in the first sensor winding 45a. Similarly, the signal components supplied to the first and second excitation windings 43a, 43b at around the second carrier frequency induce a resonant signal in the second resonant circuit 47b, which in turn induces a signal in the first sensor winding 45a.

As set out in UK Patent Application GB 2374424A, when the signal induced in the first sensor winding 45a is input into a first synchronous detector 159a which performs synchronous detection using the quadrature signal $Q_1$ at the first carrier frequency, the resultant signal output by the first synchronous detector 159a has a component at the modulation frequency whose phase depends on the angular position of the first shaft 1. This phase is detected by a first phase detector 161a. Similarly, when the signal induced in the first sensor winding 45a is input into a second synchronous detector 159b which performs synchronous detection using the quadrature signal $Q_2$ at the second carrier frequency, the resultant signal output by the second synchronous detector 159b has a component at the modulation frequency whose phase depends on the angular position of the second shaft 11. This phase is detected by a second phase detector 161b.

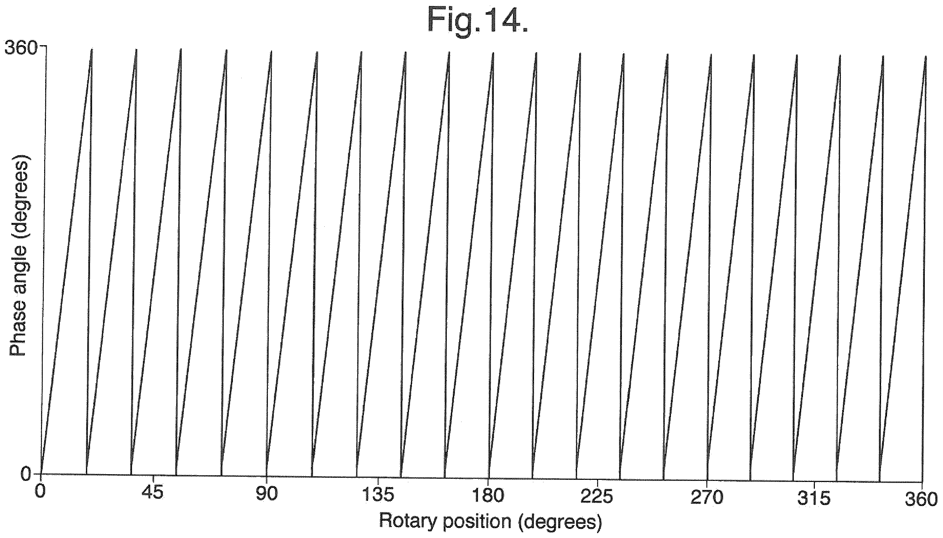

Figure 14 shows a graph indicating the relationship between the phase detected by the first phase detector 161a and the angular position of the first shaft 1 in an ideal scenario. As a result of the twenty periods of the excitation windings over a full revolution, as shown in Figure 14 the phase detected by the first phase detector 161a corresponds to twenty different absolute rotary positions of the first shaft 1. Similarly, the phase detected by the second phase detector 161b corresponds to twenty different rotary positions of the second shaft 11. The first ASIC 35a is therefore unable to determine the absolute rotary positions of the first and second shafts 1,11 (in this specification absolute rotary position refers to the rotary position of a shaft relative to a reference position; as the shafts can rotate around two full revolutions the absolute position does not unambiguously give the position of a shaft within its entire rotary range of movement). In this embodiment, the processor 163 alternately generates the first output signal conveying the phase angle detected by the first phase detector 161a, which is indicative of the angular position of the first shaft 1, and the second output signal conveying the phase angle detected by the second phase detector 161b, which is indicative of the position of the second shaft 11.

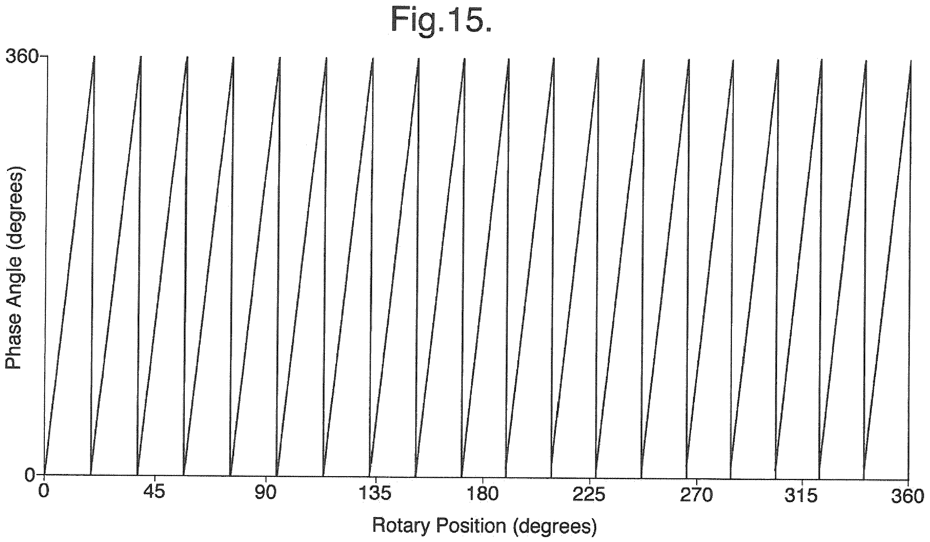

In the second sensing arrangement 41b, the second ASIC 35b is substantially identical to the first ASIC 35a except that the first carrier frequency is set to 5MHz and the second carrier frequency is set to 2.5MHz. As discussed, the periodicity of the excitation windings and the resonant circuits in the second sensing arrangement 41b corresponds to nineteen periods over 360°. Therefore, as shown in Figure 15 for an ideal scenario, each phase angle reading corresponds to nineteen possible rotary positions. The second ASIC 35b alternately generates the third output signal conveying a phase angle that is indicative of the angular position of the first shaft 1 and the fourth output signal conveying a phase angle that is indicative of the angular position of the second shaft 11. In addition, the first output signal generated by the first ASIC 35a is transmitted simultaneously with the third output signal generated by the second ASIC 35b, and the second output signal generated by the first ASIC 35a is transmitted simultaneously with the fourth output signal generated by the second ASIC 35b.

The first and second output signals from the first ASIC 35a and the third and fourth output signals from the second ASIC 35b are input to the central control unit 49, which calculates the absolute rotary position of the first shaft 1, the absolute rotary position of the second shaft 11, and the rotary position of the first shaft 1 relative to the second shaft 11. In accordance with the present invention, the central control unit 49 also performs a self-calibration procedure to generate calibration data for reducing error in the calculated positions.

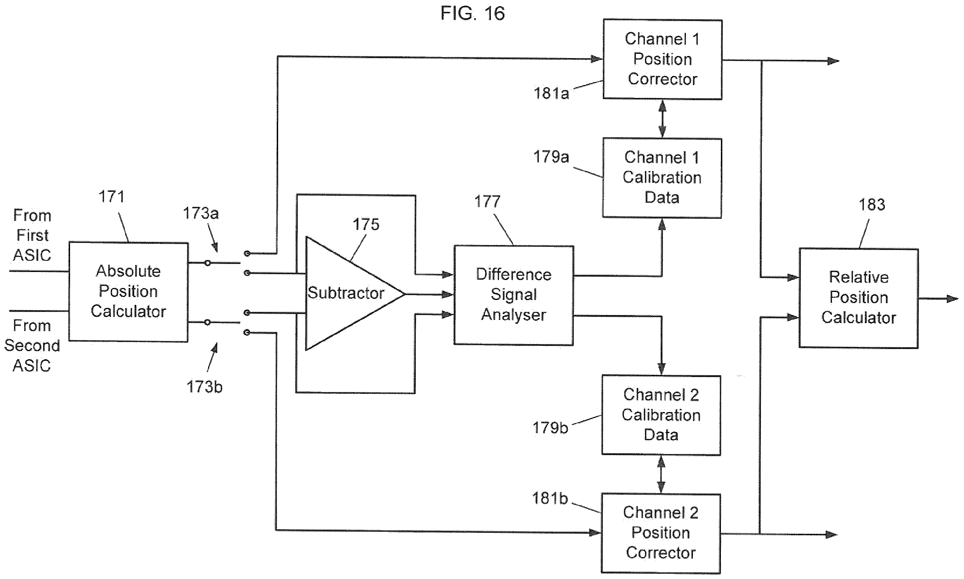

Figure 16 schematically shows functional components of the central control unit 49. As shown, the output from the first ASIC 35a and the output of the second ASIC 35b is input to an absolute position calculator 171 which determines a first position value from the output of the first ASIC 35a using the output of the second ASIC 35b to resolve the ambiguity in the phase angle received from the first ASIC 35a, and also determines a second position value from the output of the second ASIC 35b using the output of the first ASIC 35a to resolve the ambiguity in the phase angle received from the second ASIC 35b. Accordingly, when the first and second ASICs 35a,35b simultaneously respectively output the first and third output signals conveying phase angles indicative of the angular position of the first shaft 1, the absolute position calculator 171 outputs two position values for the angular position of the first shaft 1. Similarly, when the first and second ASICs 35a,35b simultaneously respectively output the second and fourth output signals conveying phase angles indicative of the angular position of the second shaft 11, the absolute position calculator 171 outputs two position values for the angular position of the second shaft 11.

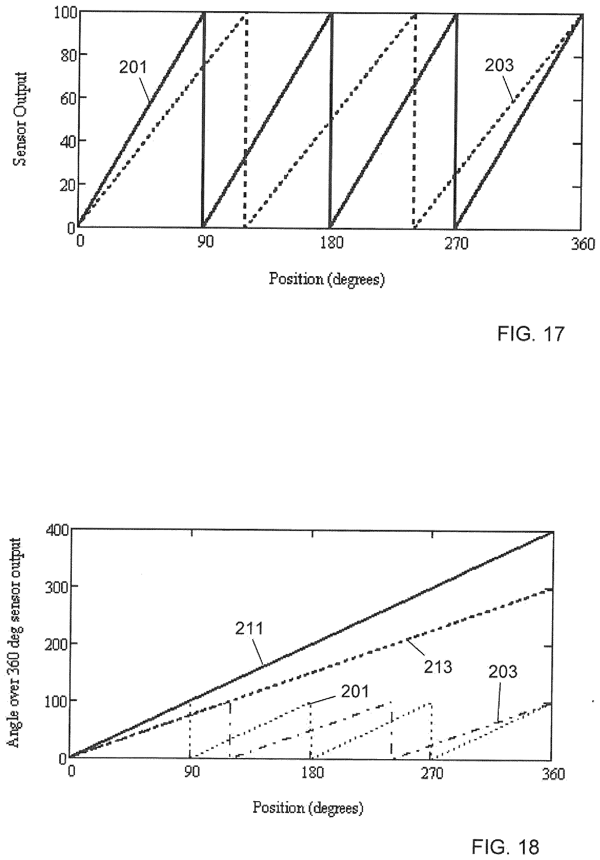

The manner in which the absolute position calculator determines position values will now be explained in more detail with reference to Figures 17 and 18 for an error-free case (i.e. the ideal scenario). For ease of illustration, in Figure 17 the phase angle output by the first ASIC 35a is represented by the solid line 201 and repeats from 0° to 360° four times over a full rotation and the output of the second ASIC 35b is represented by the dashed line 203 and repeats from 0° to 360° three times over a full rotation of 360°. (As shown in Figures 14 and 15, in this embodiment the phase angle output by the first ASIC 35a actually repeats twenty times over a full rotation and the phase angle output by the second ASIC 35b actually repeats nineteen times over a full rotation.) It is well known that the outputs of the first and second ASICs 35a,35b as shown in Figure 17 can be processed to calculate an unambiguous position value. In particular, as shown in Figure 18, a first unambiguous angle 211 can be determined from the output of channel 1 using the output of channel 2 to resolve ambiguity and a second unambiguous angle 213 can be calculated from the output of channel 2 using the output of channel 1 to resolve ambiguity. One way of calculating the first unambiguous angle is using the following formula:

$$Angle_1 = floor\left[\left(\frac{((P1 - P2) \times N)_{MOD\,scale \times N} - P1 + Offset}{scale}\right)_{MOD\,N}\right] \times scale + P1$$

where:

$Angle_1$ is the value of the first unambiguous angle;
P1 and P2 are the phase angles outputs from channel 1 and channel 2 respectively;
scale is the output range of channel 1 and channel 2;
N is number of periods of the sensor output of channel 1; and
Offset is a constant.

It will be appreciated that an analogous formula can be used to determine the second unambiguous angle.

Figures 17 and 18 represent an ideal, error-free situation in which the variation in the first unambiguous angle 211 with position follows a known first measurement function (in this embodiment, exhibiting a linear relationship) so that the first unambiguous angle can be converted to a first position value representative of absolute position. Similarly, ideally the variation of the second unambiguous angle 213 with position follows a known second measurement function (in this embodiment, also a linear relationship) so that the second unambiguous angle can be converted to a second position value representative of absolute position. In such an ideal system, the first position value would be identical to the second position value.

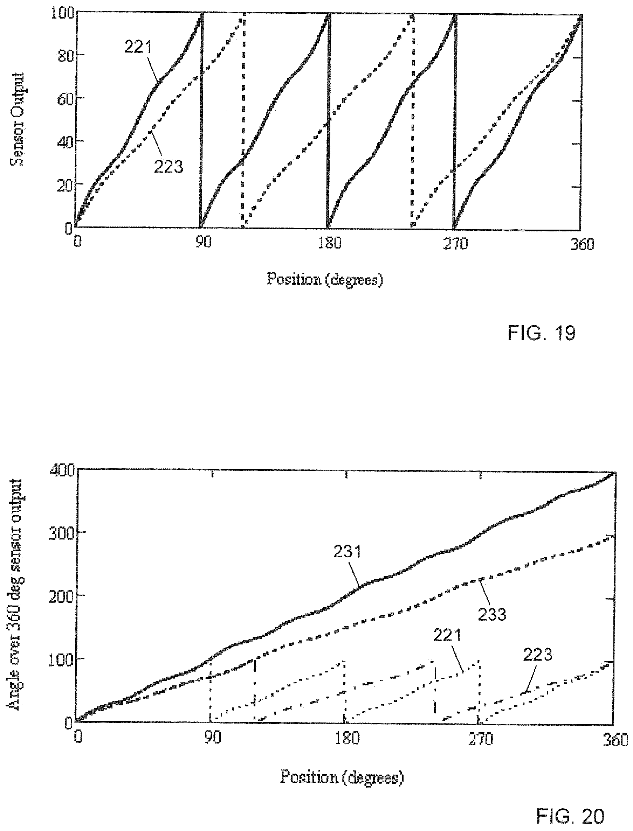

In real systems, however, the phase angles output by the first ASIC 35a incorporate unknown error components such that the variation of the first unambiguous angle with position follows a known first measurement function modified by an unknown first error function, and the phase angles output of the second ASIC 35b incorporates unknown error components such that the variation of the second unambiguous angle with position follows a known second measurement function modified by an unknown second error function. Figures 19 and 20 represent such an arrangement, with the output of the first ASIC 35a represented by the line 221, the output of the second ASIC 35b represented by the line 223, the first position signal being represented by the line 231 and the second position signal being represented by the line 233.

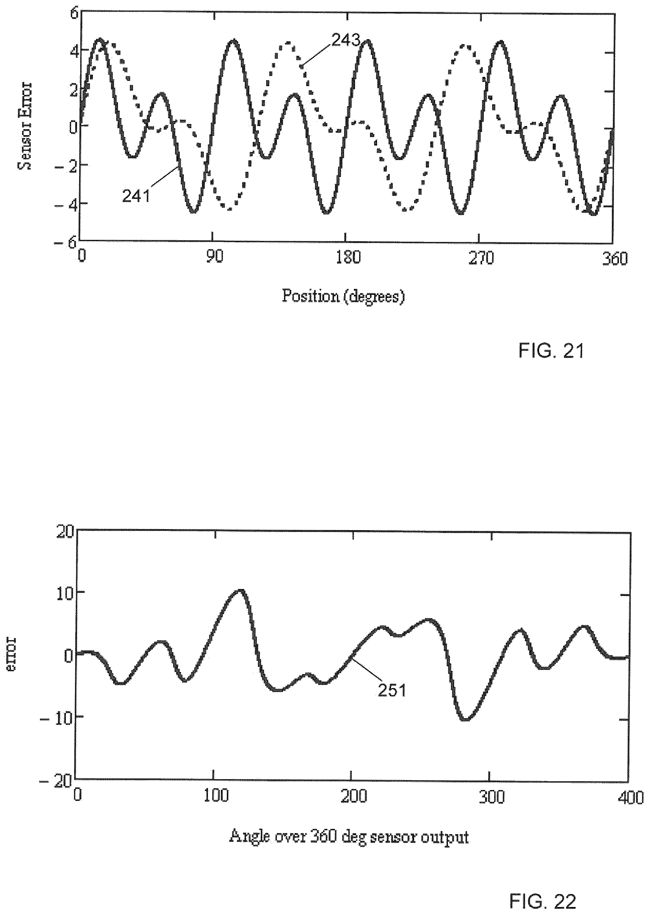

Although the first error function and the second error function are unknown, it can be seen from Figure 21 that the first error function 241 typically varies periodically with the same period as the first measurement function, and the second error function 243 typically varies periodically with the same period as the second measurement function.

In this embodiment, which uses both sine and cosine signals to determine position:

- An offset in one or both of the sine and cosine results in an error component having the same period as the corresponding measurement function.
- An offset in the amplitude of the sine with respect to the amplitude of the cosine results in a harmonic error component having a period half that of the corresponding measurement function.
- A distortion of one or both of the sine and cosine, for example by clipping, results in a harmonic error component having a period quarter that of the corresponding measurement function.

As a result of the difference between the first error function and the second error function, at any time the first position value, calculated from the first unambiguous angle, is typically not equal to the second position value, calculated from the second unambiguous angle.

Returning to Figure 16, the first position value is output by the absolute position calculator 171 as a first position signal and is input to a first switch 173a, and the second position value is output by the absolute position calculator 171 as a second position signal and is input to a second switch 173b. As the first and second ASICs 35a,35b alternately output phase angles representative of the position of the first shaft 1 and the second shaft 11, the first and second position signals accordingly alternately convey position values for the first shaft 1 and position values for the second shaft 11, with the position values for the first shaft 1 being conveyed synchronously by the first and second position signals and the position values of the second shaft 11 being conveyed synchronously by the first and second signals.

During the self-calibration procedure, the first and second switches 173a,173b are controlled by a controller (not shown) such that the first position signal is input to a first port of a subtractor 175 and a first port of a difference signal analyser 177, and the second position signal is input to a second port of the subtractor 175 and a second port of a difference signal analyser 177. The subtractor 175 outputs a difference signal conveying a difference value indicative of the difference between the position value conveyed by the first position signal, which forms the output of a first channel, and the position value conveyed by the second position signal, which forms the output of a second channel. For the first shaft 1, Figure 22 shows the difference function 251 formed by the difference values output by the subtractor 175 over a full rotation of the first shaft 1. The difference function has a first error component associated with the first error function and a second error component associated with the second error function. The difference signal is input to a third port of the difference signal analyser 177, which analyses the difference signal to determine calibration data for the first channel, which is stored in data memory 179a, and calibration data for the second channel, which is stored in data memory 179b.

In this embodiment, the difference signal analyser 177 collects data corresponding to a full revolution, and then performs Fourier analysis to extract the first error component, associated with the first error function, and the second error component, associated with the second error function. In particular, components of the difference signal with the same periodicity, or a harmonic thereof, as the first error function are attributed to the first error component, and components of the difference signal with the same periodicity, or a harmonic thereof, as the second error function are attributed to the second error component.

Following the self-calibration procedure, the first switch 173a is controlled to direct the first position signal output by the absolute position calculator 171 to a first position corrector 181a, which determines the error value stored in the first data memory 179a in association with the value of the first position signal and uses that error value to correct the value of the first position signal. Similarly, following the self-calibration procedure, the second switch 173b is controlled to direct the second position signal output by the absolute position calculator 171 to a second position corrector 181b, which determines the error value stored in the second data memory 179b in association with the value of the second position signal and uses that error value to correct the value of the second position signal.

The corrected position values output by the first position corrector 181a and the second position corrector 181b are output on respective output lines. The corrected position values are also both input to a relative position calculator 183, which compares a position value for the first shaft 1 with a position value for the second shaft 11 to determine the relative position of the first shaft 1 and the second shaft 11. In particular, given that the central control unit 49 alternately determines corrected position values for the first shaft 1 and the second shaft 11, in this embodiment the relative position calculator 183 determines the difference between (i) a corrected position value calculated for one of the first shaft 1 and the second shaft 11, and (ii) the average of the corrected position values calculated for the other of the first shaft 1 and the second shaft 11 immediately preceding and succeeding that corrected position value.

## SECOND EMBODIMENT

In the first embodiment, the difference signal analyser performs Fourier analysis of the difference signal to determine the first error function and the second error function. Such harmonic analysis is not essential, and a second embodiment will now be described in which an alternative technique is performed to determine calibration data for at least partially compensating for the first error function and the second error function.

As discussed above, each phase angle output by the first ASIC 35a has an associated error value and each phase angle output by the second ASIC 35b has an associated error value. However, the difference between the position values calculated from each phase angle output by the first ASIC 35 causing the corresponding phase angle output by the second ASIC 35b has different values for different cycles of the phase angle output by the first ASIC 35a because in different cycles the corresponding phase angle output value by the second ASIC 35b is different and accordingly has a different error component. The harmonic nature of the second error function, at a fundamental frequency different from the fundamental frequency of the first error function, means that the average of the values of the second error function corresponding to each phase angle output by the first ASIC 35a over a plurality of cycles will tend to zero. Accordingly, if the value of the difference function corresponding to each phase angle output by the first ASIC 35a is averaged over a plurality of cycles, the varying values associated with the second error function will average out to zero and the constant value associated with the first error function will remain.

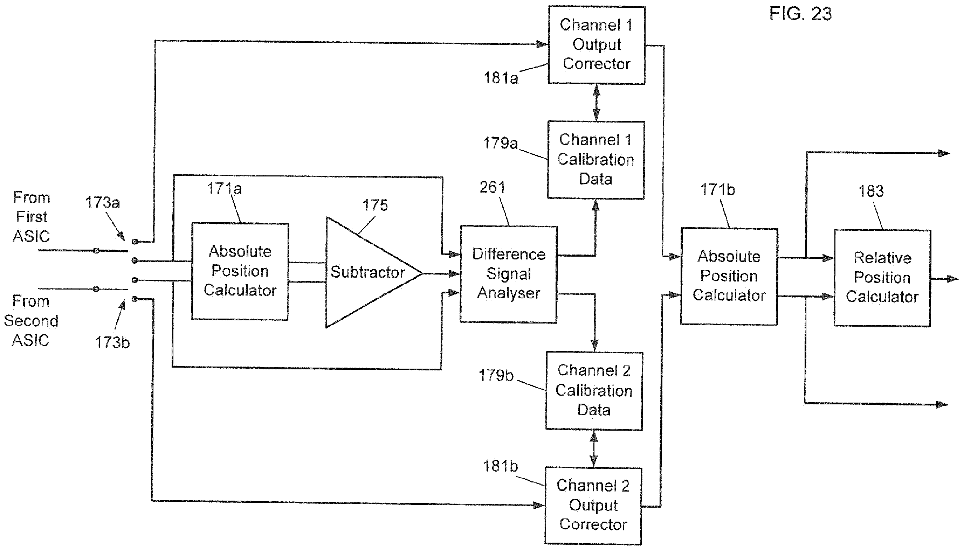

As shown in Figure 23, in the second embodiment the outputs from the first and second ASICs 35a,35b are input directly to the switch 173. In the self-calibration mode, the switch 173 directs the outputs of the first and second ASICs 35a,35b to a first absolute position calculator 171a, which determines a first position reading from the output of the first ASIC 35a using the output of the second ASIC 35b to resolve ambiguity and determines a second position reading from the output of the second ASIC 35b using the output of the first ASIC 35a to resolve ambiguity. The first and second position readings output by the first absolute position calculator 171a are input to a subtractor 175, which determines a difference signal. This difference signal is input, together with the corresponding values output by the first ASIC 35a and the second ASIC 35b, to a difference signal analyser 261.

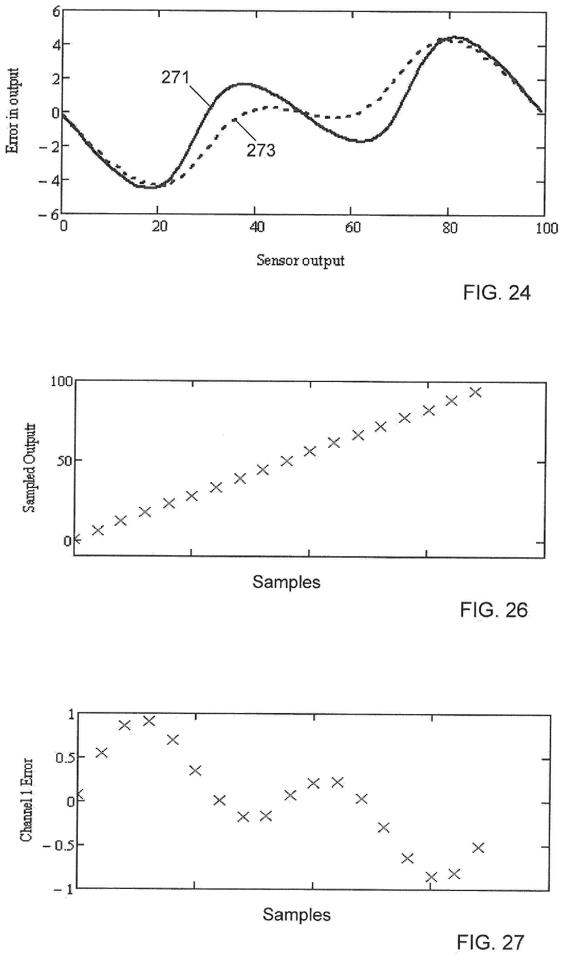

For each value of the phase angle output by the first ASIC 35a with respect to the position of the first shaft 1, the difference signal analyser 261 stores the corresponding values of the difference signal and then averages these stored values. Similarly, for each value of the phase angle output by the second ASIC 35b with respect to the position of the first shaft 1, the difference signal analyser 261 stores the corresponding values of the difference signal and then averages those stored values. In this way, as shown in Figure 24, two separate error functions 271,273 are generated for the position of the first shaft 1, one for each channel. In the same way, two separate errors functions are generated for the position of the second shaft 11 from the phase angles output by the first and second ASICs 35a,35b with respect to the position of the second shaft 11.

The difference signal generator 261 then generates calibration data for channel 1 for correcting the output of the first ASIC 35a and stores that calibration data in a first pair of look-up tables 179a, one look-up table for phase angles indicative of the position of the first shaft 1 and the other look-up table indicative of the position of the second shaft 11. Similarly, the difference signal generator 261 generates calibration data for channel 2 for correcting the output of the second ASIC 35b and stores that calibration data in a second pair of look-up tables 179b.

Following the self-calibration procedure, the first switch 173a is controlled to direct the output of the first ASIC 35a to a first output corrector 181a, which determines the error value stored in the first look-up table 179a associated with the value of the output of the first ASIC 35a and uses that error value to correct the value of the first ASIC 35a. Similarly, following the self-calibration procedure, the second switch 173b is controlled to direct the output of the second ASIC 35b to a second output corrector 181b, which determines the error value stored in the second look-up table 179b associated with the value of the output of the second ASIC 35b and uses that error value to correct the value of the output of the second ASIC 35b.

The corrected values output by the first position corrector 181a and the second position corrector 181b are input to a second position calculator 171b, which determines a first corrected position reading from the output of the first position corrector 181a using the output of the second position corrector 181b to resolve ambiguity and determines a second corrected position reading from the output of the second position corrector 181b using the output of the first position corrector 181a to resolve ambiguity. The two corrected position readings are output on respective lines, and are also input to a relative position calculator 183 which compares a position value for the first shaft 1 with a position value for the second shaft 11 to determine and output a relative position of the first shaft 1 and the second shaft 11 in the same manner as in the first embodiment.

## THIRD EMBODIMENT

The second embodiment takes advantage of the fact that, due to the harmonic nature of the first and second error functions, for each value of the output of one of the ASICs 35 the contribution to the difference function caused by error in the output of the other of the ASICs 35 tends to zero when averaged over multiple cycles. A third embodiment will now be described which utilises a self-calibration technique that takes advantage of a further property of the harmonic nature of the first and second error functions. In particular, the third embodiment takes advantage of the fact that for each value of phase angle output of one of the ASICs 35 with respect to one of the first shaft 1 and the second shaft 11, the corresponding error in the output of that ASIC 35 is constant over all cycles.

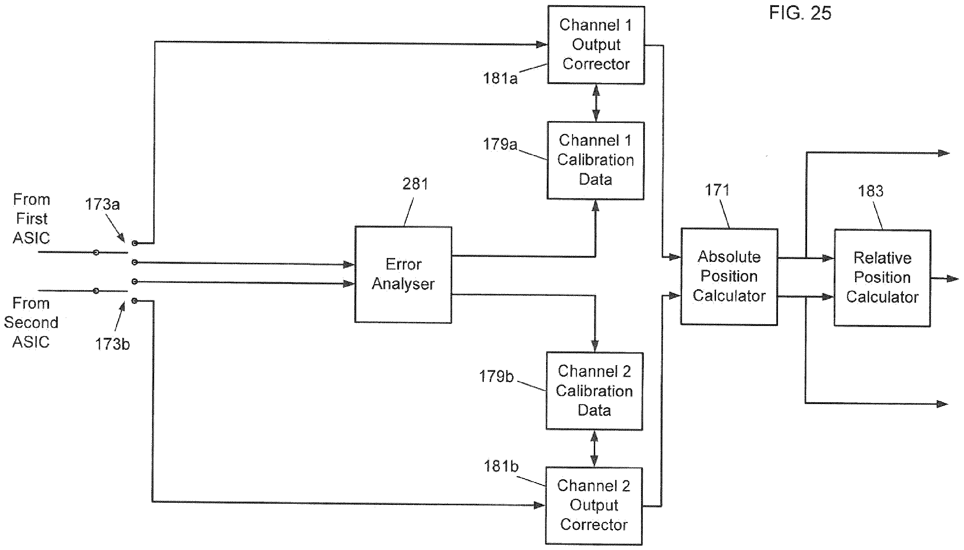

The third embodiment differs from the second embodiment only in the operation of the central control unit. As shown in Figure 25, the central control unit of the third embodiment is similar to that of the second embodiment, but during the self-calibration procedure the outputs from the first and second ASICs 35a,35b are input directly to an error analyser 281. The error analyser 281 generates calibration data for channel 1 for correcting the output of the first ASIC 35a and stores that calibration data in a first look-up table 179a, and generates calibration data for channel 2 for correcting the output of the second ASIC 35b and stores that calibration data in a second look-up table 179a.

The way in which the error analyser 281 generates the calibration data will now be described. Referring back to Figures 14 and 15, the output of the first ASIC 35a is in the form of a sawtooth function having twenty cycles and the output of the second ASIC 35b is in the form of a sawtooth function having nineteen cycles. The error associated with an output value of the second ASIC 35b is the same in each cycle. In this embodiment, the error analyser samples the output of the first ASIC 35a each time that the output of the second ASIC 35b reaches a predetermined value. Figure 26 shows the values of the output of the first ASIC 35a sampled each time that the output of the second ASIC 35b reaches zero, an example of the predetermined value.

Any deviation of the resultant function from a linear function is as a result of error in the output of the first ASIC 35a. Accordingly, the error analyser 281 then subtracts a simple linear function from the sampled values, and Figure 27 shows the channel error obtained by such a subtraction. For each sampled value, as shown in Figure 26, the error analyser 281 now has the corresponding error value, as shown in Figure 27, and accordingly is able to generate calibration data for correcting the output of the first ASIC 35a.

It will be appreciated that by sampling the output of the second ASIC 35b each time that the output of the first ASIC 35a reaches a predetermined value (for example zero), the error corrector 281 generates calibration data for correcting the output of the second ASIC 35b in a similar manner.

## FOURTH EMBODIMENT

In the previous embodiments, the first and second measurement functions are sawtooth functions. However, the invention is equally applicable when the first and second measurement functions are not sawtooth functions. By way of example a fourth embodiment will be described in which the first and second measurement functions are sinusoidal functions.

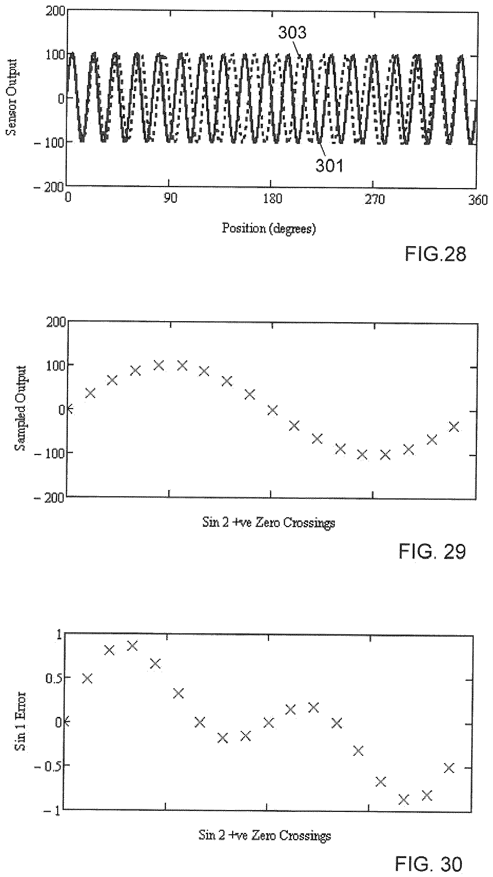

As shown in Figure 28, in this embodiment the output of the first ASIC 35a varies with position in accordance with a generally sinusoidal function having nineteen periods over a full rotation through 360°, and the output of the second ASIC 35b has a generally sinusoidal function having eighteen periods over a full rotation through 360°. In this embodiment, the central control unit operates in a similar manner to that of the third embodiment. During the self calibration procedure, the outputs of the first and second ASICs 35a,35b are input to an error corrector. To determine calibration data for correcting the output of the first ASIC 35a, the error analyser samples the output of the first ASIC 35a each time that the output of the second ASIC 35b passes a predetermined position within a period, for example when the output of the second ASIC 35b passes through 0 with a positive gradient. The result of such sampling is shown in Figure 29.

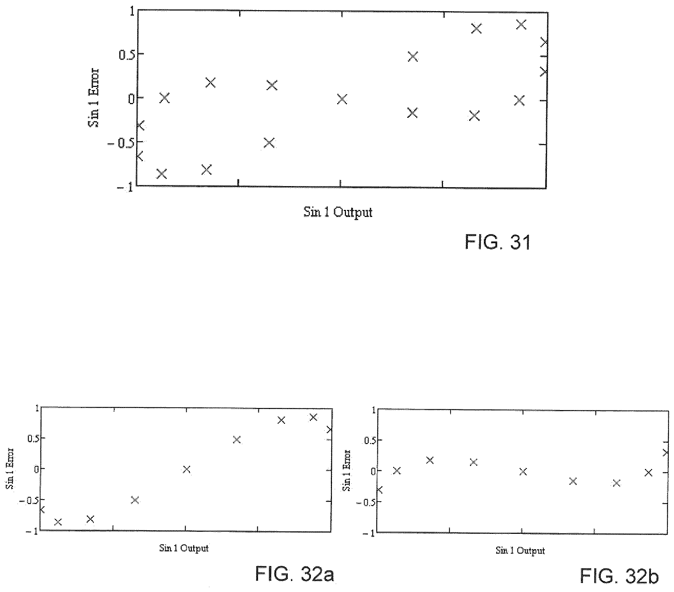

The error analyser then subtracts a sinusoidal function from the sampled values, to arrive at error values as shown in Figure 30. These error values can then be mapped onto the corresponding sample values in order to generate calibration data, as shown in Figure 31. It will be appreciated that the error corrector generates calibration data for correcting the output of the second ASIC 35b in a similar manner.

As is apparent from Figure 31, a difference between the present embodiment and the third embodiment is that for each value of the output of an ASIC 35, there are two error correction values, one corresponding to that output value with positive slope and one corresponding to that output value with negative slope. Figure 32a shows the mapping of error values to sample values with positive slope and Figure 32b shows the mapping of error values to sample values with negative slope.

When performing measurement, in order to use the correct calibration data the channel output correctors 181 must determine whether a received output value has positive slope or negative slope. For a non-stationary rotor, provided that the direction of rotation is known, the slope of the output can be monitored from successive readings. Alternatively, the ASICs 35a,35b may provide both sine and cosine outputs such that the slope of the sine output can be determined from the sign of the cosine output.

## FIFTH EMBODIMENT

In the first to fourth embodiments, although the first error function and the second error function are unknown, it is known that, by virtue of the use of a Vernier-type arrangement, the first and second error functions are periodic with different spatial frequencies. This knowledge enables the first and second error functions to be determined by analysing the outputs of the first and second channels.

A fifth embodiment will now be described in which errors introduced into the output of a rotary sensor caused by eccentric mounting of the rotor relative to the stator can be determined by providing two measurement channels, the measurement channels respectively corresponding to two different rotary positions.

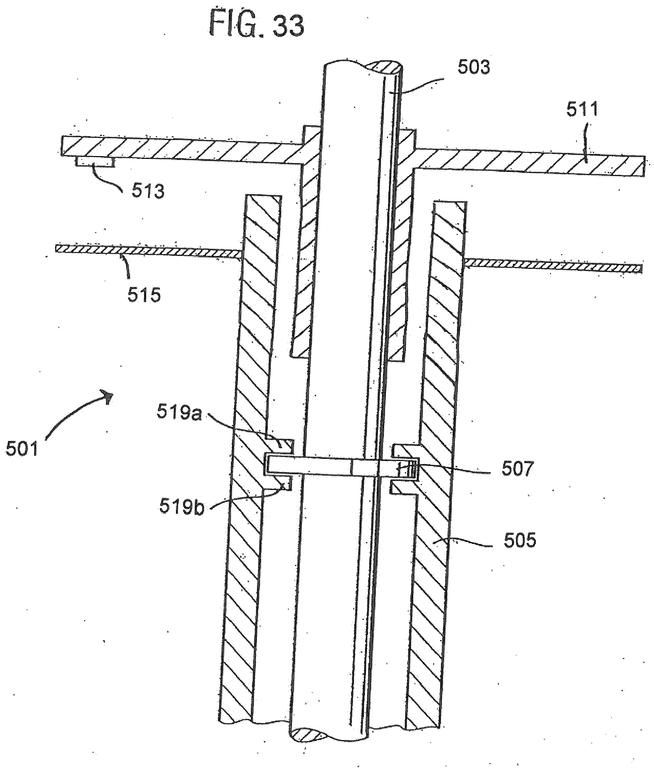

Figure 33 shows a rotary joint 501 in which an elongate cylindrical shaft 503 is partially mounted within a cylindrical sleeve 505. A flange 507 is provided on the shaft 503 at a point which is inserted within the sleeve 505. The flange 507 engages a slot formed by two flanges 509a, 509b provided on the inner surface of the sleeve 505 to prevent axial movement of the shaft 503 while allowing complete freedom of rotational movement. A disc-shaped member 511 is fixed co-axially to the shaft 503 so as to rotate with the shaft 503.

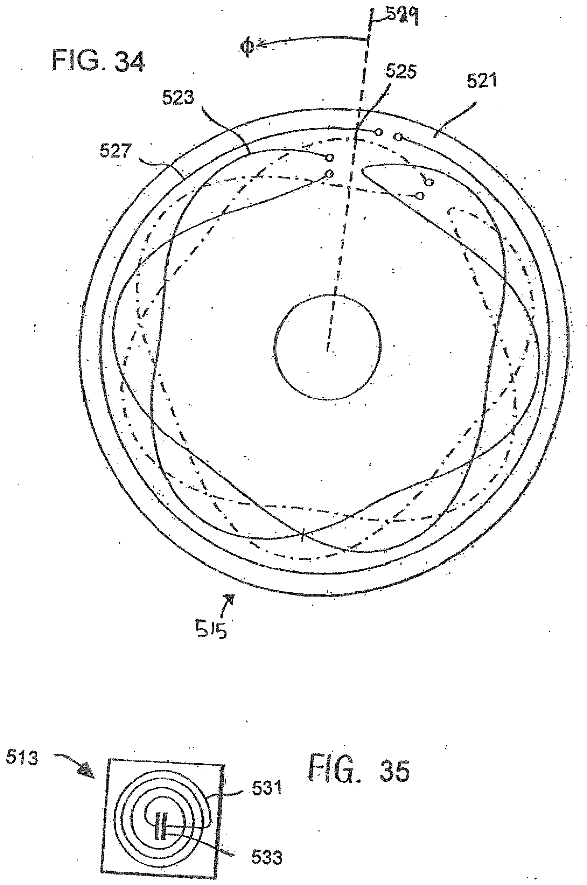

Two sensor elements 513, only one of which is shown in Figure 33, are fixed at respective different rotary positions at an outer radial position of the disc-shaped member 511, and a circular printed circuit board (PCB) 515, which is fixed co-axially to the sleeve 505, form part of a rotary position encoder. The angular position of the shaft 503 is determined by measuring the circumferential locations of the sensor elements 513 using a transmitter aerial and a receive aerial which are provided on the PCB 515. The aerials provided on the PCB 515 will now be described in more detail with reference to Figure 34.

Figure 34 schematically shows a plan view of the end surface 521 of the PCB 515 which faces the disc member 511. The transmit aerial is formed by a sine coil 523 and a cosine coil 525, shown in chained lines in Figure 34, and the receive aerial is formed by a sense coil 527. For illustrative purposes, the sine coil 523 and the cosine coil 525 are shown formed entirely on the end surface 521, whereas in practice the sine coil 523 and the cosine coil 525 are formed, in a manner which is well known in the art, by portions of conductive tracks on both planar surfaces of the PCB 515 which are interconnected using via holes.

As shown in Figure 34, the sine coil 523 effectively forms a sequence of 6 current loops along a path which extends around the axis of the shaft 503. When a signal is applied to the sine coil 523, current flows around adjacent loops of the sine coil 523 in opposite directions. In this way, the sine coil 523 periodically repeats three times with each period corresponding to an angle of 120" of rotation of the shaft 503. Similarly, the cosine coil 525 is formed by a sequence of six current loops around the same path as the sine coil 523, but with the loops of the cosine coil 525 being offset from the loops of the sine coil 523 by one quarter of a period.

In this embodiment, as shown in Figure 35, each sensor element 513 includes a piece of printed circuit board having a coil 531 of conductive track whose ends are connected to respective terminals of a capacitor 533. The coil 531 of conductive track has an associated inductance, and therefore in combination with the capacitor 533 forms a resonant circuit. Each of the sensor elements 513 has associated a different resonant frequency. In this embodiment, the two sensor elements are separated in the rotary direction by 90°.

An ASIC as described with reference to Figure 13 is electrically connected to the PCB 515, the output of the coil driver 157a being connected across the sine coil 523 and the output of the coil driver 157b being connected across the cosine coil 525 and the receive aerial being connected to the synchronous detectors 159a,159b. In this way, the processor 163 alternately outputs data conveying phase angles corresponding to the position of the two sensor elements 513. In this embodiment, the rotary joint is a single direction moving joint, and accordingly the absolute position of the shaft 503 relative to the PCB 515 can be tracked by counting though the cycles of the phase angles output by the ASIC.

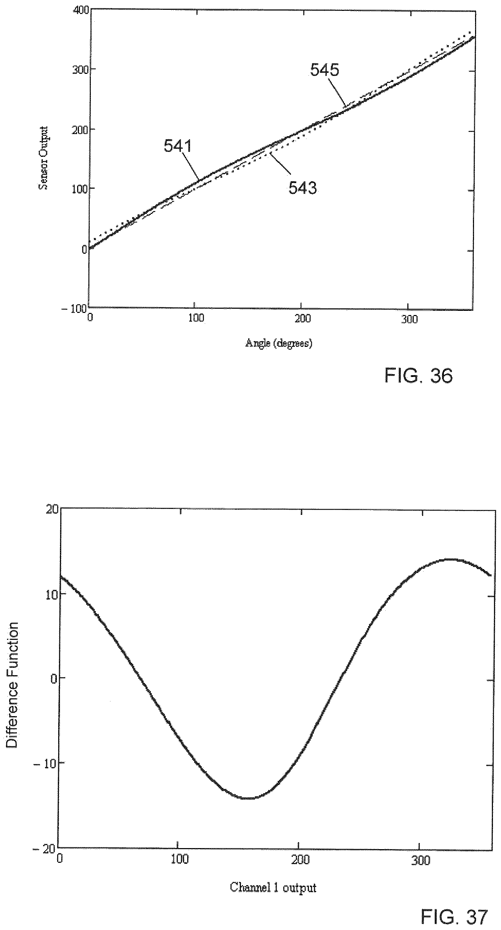

For such a rotary position sensor, any misalignment between the axis of the shaft 503 and the axis of the PCB 515 (i.e. the point about which the sine coil 523, the cosine coil 525 and the sense coil 527 are formed) introduces an error component into the phase angles output by the ASIC. This error is constant for each rotary position of the shaft 503 relative to the PCB 515 (a so-called 1F error). Figure 36 shows the relationship between the absolute rotary position and sensor output value for each of the sensor elements, respectively the solid line 541 and the dotted line 543 in comparison with an ideal linear relationship, the dashed line 545.

In this embodiment, the difference between the absolute position value determined by the two channels (each corresponding to a respective sensor element) is determined for each value of the output of one of the two channels to generate a difference function, as shown in Figure 37. This difference function will have contributions from errors in both the first channel and the second channel. The relationship between these errors is, however, known, and an estimate of the error in the first channel can be calculated using the formula:

$$Angle1 = Angle1 + \frac{1}{2\sin\left(\theta_{off}/2\right)} \times Error1F\left\{Angle1 - \theta_{off}/2\right\}$$

where:

Angle 1 is the position determined by the first channel;
$\theta$off is the angular offset between the two sensor elements (in this embodiment 90°); and
Error1F is the difference function.

It will be appreciated that a similar calculation can be performed for the output of the second channel.

## MODIFICATIONS AND FURTHER EMBODIMENTS

In the fifth embodiment, a transmit aerial and a receive aerial is used to determine the position of two sensor elements 513, each associated with a respective different resonant frequency. Those of ordinary skill in the art will appreciate that alternatively two sensing circuits (each formed of a transmit aerial and a receive aerial) can be formed at localised positions in the measurement direction, and a single resonant circuit arranged so that the coupling with the two sensing circuits varies with position is formed along the measurement direction. In a similar manner to the fifth embodiment, any misalignment between the axis of the shaft 503 and the axis of the PCB515 can be corrected for by suitable processing of the position values determined by the two sensing circuits.

As stated above, using plural periodically-spaced current loop structures in the resonant circuits has the advantage of increasing signal strength. While in the illustrated embodiment the periodic spacing of the current loop structures matches the period of the corresponding transmit aerial, the period of the resonant circuits could be any integer multiple of the period of the corresponding transmit coil.

In the first to fourth embodiments, the excitation windings, the sensor windings and the current loop structures of the resonant circuits are arranged on circumferential surfaces. However, this is not essential and the excitation windings, sensor windings and current loop structures could, for example, be formed on radial surfaces such as in the fifth embodiment. In an embodiment, the radial surfaces for the current loop structures are provided by the surfaces of disks attached co-axially to the first and second shafts.

In the first to fourth embodiments, in each sensing arrangement the associated resonant circuits are simultaneously energised, and the resultant signals induced in the sensor winding input into parallel processing paths to allow the phase angles at the modulation frequency associated with each resonant circuit to be measured in parallel. Alternatively, the resonant circuits could be alternately energised and the resultant signal induced in the sensor winding input into a single processing path in which the frequency of the synchronous detection is alternated in accordance with the energised resonant circuit.

In the illustrated embodiment, the excitation signal generating and sensed signal processing circuitry employs the general principles disclosed in GB 2374424A. However, alternative forms of excitation signal generating and sensed signal processing could be employed. For example, instead of having two excitation windings in the transmit aerial and detecting the phase of a signal induced in receive aerial formed by a single sensor winding, the transmit aerial could be formed by a single excitation winding and the receive aerial could be formed by two sensor windings, with the coupling between the excitation winding and the two sensor windings varying with rotary position. The general principles of such a rotary encoder are discussed in WO 95/31696.

In the described embodiment, carrier frequencies from 1.875MHz to 5MHz are used. It will be appreciated that the exact values of the carrier frequencies (and accordingly the resonant frequencies of the resonant circuits) is a design choice, although preferably the carrier frequencies are in the range 10OkHz to 105MHz to achieve good signal coupling with comparatively cheap excitation and synchronous detection circuitry. The modulation frequency is also a design choice.

In the illustrated embodiment, the two sensing arrangements have a periodicity of twenty periods over 360° and nineteen periods over 360° respectively to enable absolute position measurement be carried out. It will be appreciated that alternative periodicities could be used.While in the illustrated embodiment absolute position measurement is obtained only with reference to the housing, it will be appreciated that the absolute position within the entire range of rotary movement could be measured by either employing an extra sensor to count revolutions or by continuously monitoring the rotary position in order to keep track of the revolutions.

Although separate ASICs are used for the two sensing arrangements in the illustrated embodiment for safety reasons, this is not essential and in many applications a common ASIC could be used for both sensing arrangements while still satisfying safety requirements. In some applications, the redundant sensing arrangement is not necessary and the redundant sensing arrangement accordingly need not be included.

It will be appreciated that there are many conventional signalling systems which could be used to transfer data between the ASICs and the central control unit, e.g. pulse width modulation or pulse code modulation.

Although ASICs are used in the illustrated embodiment, this is not essential and any other processing means could be employed, including using discrete electronic components. In the illustrated embodiment, the aerials and resonant circuits are formed using PCB technology. This is not essential and other techniques for arranging conductive tracks, including arranging wire tracks, could alternatively be used.

## Claims

1. A position sensor for sensing a position within a measurement range, the position sensor comprising:

   a first channel (41a) arranged to produce a first output which varies with position in the measurement range, the variation in the first output with position being in accordance with a first measurement function modified by a first error function;
   a second channel (41b) arranged to produce a second output which varies with position in the measurement range;
   means (175,177) for determining first calibration data from values of the first output and the second output for different positions within the measurement range, said first calibration data at least partially compensating for the first error function; and
   means (181a) for processing the first output signal using the first measurement function and the first calibration data to generate a position value.

2. A position sensor according to claim 1, wherein the determining means comprises:

   means (175) for calculating a difference function corresponding to the difference between the first output and the second output over the measurement range; and
   means (177) for analysing the difference function to extract the first error function.

3. A position sensor according to claim 1, wherein the variation of the second output with position is in accordance with a second measurement function modified by a second error function that is different from the first error function, and wherein the determining means (175,177) is further operable to determine calibration data for at least partially compensating for the second error function, and wherein the processing means is arranged to generate the position value using the first and second output signals, the first and second measurement functions and the first and second calibration data.

4. A position sensor according to claim 3, wherein the determining means comprises:

   means (175) for calculating a difference function corresponding to the difference between the first output and the second output over the measurement range; and
   means (177) for analysing the difference function to extract the first error function.

5. A position sensor according to claim 4, wherein the analysing means is further operable to extract the second error function from the difference function.

6. A position sensor according to claim 1, wherein the variation of the second output with position has a second error function that is different from the first error function, and wherein the first error function has components at a first spatial frequency and one or more harmonics thereof and the second error function has components at a second spatial frequency and one or more harmonics thereof, the second spatial frequency being different from the first spatial frequency.

7. A position sensor according to claim 6, wherein the first output repeats N times in the measurement range and the second output repeats M times in the measurement range, where N>M and N and M share no common integers greater than 1.

8. A position sensor according to claim 6 or 7, wherein the processing means comprises:

   means for determining a difference function corresponding to the difference between the first output and the second output over the measurement range; and
   means for analysing the difference function to extract the first error function,
   wherein the analysing means is arranged to perform harmonic analysis on the difference function.

9. A position sensor according to claim 6 or 7, wherein the processing means comprises:

   means for determining a difference function corresponding to the difference between the first output and the second output over the measurement range; and
   means for analysing the difference function to extract the first error function,
   wherein the processing means is arranged to calculate calibration data for a value of the first output using the average of the difference between the first output and the second output each time that said value of the first output occurs.

10. A position sensor according to claim 1, wherein the variation of the second output with position has a second error function that is different from the first error function, and wherein the first error function varies sinusoidally with position with a period corresponding to the measurement range and a first phase, and the second error function varies sinusoidally with position with a period corresponding to the measurement range and a second phase, wherein the first phase is different from the second phase by an angle $\theta$.

11. A position sensor according to claim 10, wherein the processing means comprises:

   means for determining a difference function corresponding to the difference between the first output and the second output over the measurement range; and
   means for analysing the difference function to extract the first error function,
   wherein the analysing means is arranged to determine the first error function by phase shifting the difference function by $\theta/2$, and scaling by a scaling factor corresponding to $1/(2\sin(\theta/2))$.

12. A position sensor according to claim 1, wherein the first measurement function repeats with position at a first spatial frequency, the first error function having components at the first spatial frequency and one or more harmonics thereof, and the second output repeats with position at a second spatial frequency that is different from the first spatial frequency,
   and wherein the determining means comprises:

   means for sampling the first output as the position varies each time that value of the second output passes a predetermined position within a period of the second output to generate a sampled function;
   means for subtracting a reference function from the sampled function to generate a difference function, wherein the reference function corresponds to a single period of the first measurement function; and
   means for determining the first calibration data from the difference function.

**Patentansprüche**

1. Positionssensor zum Abtasten einer Position innerhalb eines Messbereichs, wobei der Positionssensor umfasst:

   einen ersten Kanal (41a), der eingerichtet ist, eine erste Ausgabe zu erzeugen, die mit der Position im Messbereich variiert, wobei die Variation in der ersten Ausgabe mit der Position mit einer ersten Messfunktion in Übereinstimmung ist, die durch eine erste Fehlerfunktion modifiziert ist;
   einen zweiten Kanal (41b), der eingerichtet ist, eine zweite Ausgabe zu erzeugen, die mit der Position im Messbereich variiert;
   Mittel (175, 177) zum Bestimmen erster Kalibrierungsdaten aus Werten der ersten Ausgabe und zweiten Ausgabe für unterschiedliche Positionen innerhalb des Messbereichs, wobei die ersten Kalibrierungsdaten zumindest teilweise die erste Fehlerfunktion kompensieren; und
   Mittel (181a) zum Verarbeiten des ersten Ausgabesignals unter Verwendung der ersten Messfunktion und der ersten Kalibrierungsdaten zum Erzeugen eines Positionswertes.

2. Positionssensor nach Anspruch 1, wobei die Bestimmungsmittel umfassen:

   Mittel (175) zum Berechnen einer Differenzfunktion, korrespondierend zu der Differenz zwischen der ersten Ausgabe und der zweiten Ausgabe über den Messbereich; und
   Mittel (177) zum Analysieren der Differenzfunktion, um die erste Fehlerfunktion zu extrahieren.

3. Positionssensor nach Anspruch 1, wobei die Variation der zweiten Ausgabe mit der Position in Übereinstimmung mit einer zweiten Messfunktion ist, die durch eine zweite Fehlerfunktion, die unterschiedlich von der ersten Fehlerfunktion ist, modifiziert ist, und wobei die Bestimmungsmittel (175, 177) funktionsfähig sind, um Kalibrierungsdaten zum zumindest teilweisen Kompensieren der zweiten Fehlerfunktion zu bestimmen, und wobei die Verarbeitungsmittel eingerichtet sind, den Positionswert unter Verwendung des ersten und zweiten Ausgabesignals, der ersten und zweiten Messfunktion und der ersten und zweiten Kalibrierungsdaten zu generieren.

4. Positionssensor nach Anspruch 3, wobei die Bestimmungsmittel umfassen:

   Mittel (175) zum Berechnen einer Differenzfunktion, korrespondierend zu der Differenz zwischen der ersten Ausgabe und der zweiten Ausgabe über den Messbereich; und
   Mittel (177) zum Analysieren der Differenzfunktion, um die erste Fehlerfunktion zu extrahieren.

5. Positionssensor nach Anspruch 4, wobei die Analysemittel ferner funktionsfähig sind, um die zweite Fehlerfunktion aus der Differenzfunktion zu extrahieren.

6. Positionssensor nach Anspruch 1, wobei die Variation der zweiten Ausgabe mit der Position eine zweite Fehlerfunktion aufweist, die unterschiedlich von der ersten Fehlerfunktion ist, und wobei die erste Fehlerfunktion Komponenten einer ersten Ortsfrequenz und eine oder mehrere Harmonische davon aufweist, und die zweite Fehlerfunktion Komponenten einer zweiten Ortsfrequenz und eine oder mehrere Harmonische davon aufweist, wobei die zweite Ortsfrequenz unterschiedlich zur ersten Ortsfrequenz ist.

7. Positionssensor nach Anspruch 6, wobei die erste Ausgabe sich N-mal in dem Messbereich wiederholt und die zweite Ausgabe sich M-mal in dem Messbereich wiederholt, wobei N>M ist und N und M keine gemeinsamen Integer größer als 1 annehmen.

8. Positionssensor nach Anspruch 6 oder 7, wobei die Verarbeitungsmittel umfassen:

   Mittel zum Bestimmen einer Differenzfunktion, die zu der Differenz zwischen der ersten Ausgabe und der zweiten Ausgabe über den Messbereich korrespondiert; und
   Mittel zum Analysieren der Differenzfunktion zum Extrahieren der ersten Fehlerfunktion,
   wobei die Analysemittel eingerichtet sind, eine harmonische Analyse der Differenzfunktion auszuführen.

9. Positionssensor nach Anspruch 6 oder 7, wobei die Verarbeitungsmittel umfassen:

   Mittel zum Bestimmen einer Differenzfunktion, korrespondierend zu der Differenz zwischen der ersten Ausgabe und der zweiten Ausgabe über den Messbereich; und

Mittel zum Analysieren der Differenzfunktion, um die erste Fehlerfunktion zu extrahieren,
wobei die Verarbeitungsmittel eingerichtet sind, Kalibrierungsdaten für einen Wert der ersten Ausgabe unter Verwendung des Mittelwerts des Unterschieds zwischen der ersten Ausgabe und der zweiten Ausgabe jedes Mal, bei dem der Wert der ersten Ausgabe auftritt, zu berechnen.

10. Positionssensor nach Anspruch 1, wobei die Variation der zweiten Ausgabe mit der Position eine zweite Fehlerfunktion aufweist, die unterschiedlich zur ersten Fehlerfunktion ist, und wobei die erste Fehlerfunktion mit der Position sinusförmig mit einer Periode korrespondierend zum Messbereich und einer ersten Phase variiert, und die zweite Fehlerfunktion mit der Position sinusförmig mit einer Periode korrespondierend zum Messbereich und einer zweiten Phase variiert, wobei die erste Phase unterschiedlich von der zweiten Phase mit einem Winkel $\theta$ ist.

11. Positionssensor nach Anspruch 10, wobei die Verarbeitungsmittel umfassen:

Mittel zum Bestimmen einer Differenzfunktion, korrespondierend zur Differenz zwischen der ersten Ausgabe und der zweiten Ausgabe über den Messbereich; und
Mittel zum Analysieren der Differenzfunktion, um die erste Fehlerfunktion zu extrahieren,
wobei die Analysemittel eingerichtet sind, die erste Fehlerfunktion durch Phasenverschiebung der Differenz-funktion um $\theta/2$ und durch Skalieren mit einem Skalierungsfaktor korrespondierend zu $1/(2\sin(\theta/2))$ zu bestim-men.

12. Positionssensor nach Anspruch 1, wobei die erste Messfunktion sich mit der Position in einer Ortsfrequenz wiederholt, die erste Fehlerfunktion Komponenten der ersten Ortsfrequenz und ein oder mehrerer Harmonische davon aufweist und die zweite Ausgabe sich mit der Position in einer zweiten Ortsfrequenz wiederholt, die unterschiedlich von der ersten Ortsfrequenz ist,
und wobei die Bestimmungsmittel umfassen:

Mittel zum Abtasten der ersten Ausgabe, wenn die Position variiert, jedes Mal, wenn ein Wert der zweiten Ausgabe eine vorbestimmte Position innerhalb einer Periode der zweiten Ausgabe passiert, um eine abgetastete Funktion zu generieren;
Mittel zum Subtrahieren einer Referenzfunktion von der abgetasteten Funktion zum Generieren einer Differenzfunktion, wobei die Referenzfunktion mit einer einzelnen Periode der ersten Messfunktion korrespondiert; und
Mittel zum Bestimmen der ersten Kalibrierungsdaten aus der Differenzfunktion.

## Revendications

1. Capteur de position destiné à détecter une position dans une plage de mesures, le capteur de position comprenant :

un premier canal (41a) agencé pour produire une premier sortie qui varie avec la position dans la plage de mesures, la variation de la première sortie avec la position étant conforme à une première fonction de mesure modifiée par une première fonction d'erreur ;
un second canal (41b) agencé pour produire une seconde sortie qui varie avec la position dans la plage de mesures ;
un moyen (175, 177) destiné à déterminer des premières données d'étalonnage à partir de valeurs de la première sortie et de la seconde sortie pour différentes positions dans la plage de mesures, lesdites premières données d'étalonnage compensant au moins en partie la première fonction d'erreur ; et
un moyen (181b) destiné à traiter le premier signal de sortie en utilisant la première fonction de mesure et les premières données d'étalonnage pour générer une valeur de position.

2. Capteur de position selon la revendication 1, dans lequel le moyen de détermination comprend :

un moyen (175) pour calculer une fonction de différence correspondant à la différence entre la première sortie et la seconde sortie sur la plage de mesures ; et
un moyen (177) pour analyser la fonction de différence afin d'extraire la première fonction d'erreur.

3. Capteur de position selon la revendication 1, dans lequel la variation de la seconde sortie avec la position est conforme à une seconde fonction de mesure modifiée par une seconde fonction d'erreur qui est différente de la première fonction d'erreur, et dans lequel le moyen de détermination (175, 177) peut être en outre utilisé pour déterminer des données d'étalonnage pour compenser au moins en partie la seconde fonction d'erreur, et dans lequel le moyen de traitement est conçu pour générer la valeur de position en utilisant les premier et second signaux de sortie, les première et seconde fonctions de mesure et les premières et secondes données d'étalonnage.

4. Capteur de position selon la revendication 3, dans lequel le moyen de détermination comprend :

un moyen (175) pour calculer une fonction de différence correspondant à la différence entre la première sortie et la seconde sortie sur la plage de mesures ; et
un moyen (177) pour analyser la fonction de différence afin d'extraire la première fonction d'erreur.

5. Capteur de position selon la revendication 4, dans lequel le moyen d'analyse peut être en outre utilisé pour extraire la seconde fonction d'erreur depuis la fonction de différence.

6. Capteur de position selon la revendication 1, dans lequel la variation de la seconde sortie avec la position a une seconde fonction d'erreur qui est différente de la première fonction d'erreur, et dans lequel la première fonction d'erreur a des composants au niveau d'une première fréquence spatiale et une ou plusieurs harmoniques de celle-ci et la seconde fonction d'erreur a des composants au niveau d'une seconde fréquence spatiale et une ou plusieurs harmoniques de celle-ci, la seconde fréquence spatiale étant différente de la première fréquence spatiale.

7. Capteur de position selon la revendication 6, dans lequel la première sortie se répète N fois dans la plage de mesures et la seconde sortie se répète M fois dans la plage de mesures, N étant supérieur à M et N et M ne partageant aucun entier commun supérieur à 1.

8. Capteur de position selon la revendication 6 ou 7, dans lequel le moyen de traitement comprend :

un moyen pour déterminer une fonction de différence correspondant à la différence entre la première sortie et la seconde sortie sur la plage de mesures ; et
un moyen pour analyser la fonction de différence pour extraire la première fonction d'erreur,
dans lequel le moyen d'analyse est conçu pour effectuer une analyse harmonique sur la fonction de différence.

9. Capteur de position selon la revendication 6 ou 7, dans lequel le moyen de traitement comprend :

un moyen pour déterminer une fonction de différence correspondant à la différence entre la première sortie et la seconde sortie sur la plage de mesures ; et
un moyen pour analyser la fonction de différence afin d'extraire la première fonction d'erreur,
dans lequel le moyen de traitement est conçu pour calculer des données d'étalonnage pour une valeur de la première sortie en utilisant la moyenne de la différence entre la première sortie et la seconde sortie à chaque fois que ladite valeur de la première sortie est obtenue.

10. Capteur de position selon la revendication 1, dans lequel la variation de la seconde sortie avec la position a une seconde fonction d'erreur qui est différente de la première fonction d'erreur, et dans lequel la première fonction d'erreur varie de façon sinusoïdale avec la positon avec une période correspondant à la plage de mesures et une première phase, et la seconde fonction d'erreur varie de façon sinusoïdale avec la position avec une période correspondant à la plage de mesures et à une seconde phase, dans lequel la première phase est différente de la seconde phase d'un angle $\theta$.

11. Capteur de position selon la revendication 10, dans lequel le moyen de traitement comprend :

un moyen pour déterminer une fonction de différence correspondant à la différence entre la première sortie et la seconde sortie sur la plage de mesures ; et
un moyen pour analyser la fonction de différence afin d'extraire la première fonction d'erreur,
dans lequel le moyen d'analyse est conçu pour déterminer la première fonction d'erreur par changement de phase de la fonction de différence de $\theta/2$, et mise à l'échelle par un facteur d'échelle correspondant à $1/(2\sin(\theta/2))$.

12. Capteur de position selon la revendication 1, dans lequel la première fonction de mesure se répète avec la position au niveau d'une première fréquence spatiale, la première fonction d'erreur ayant des composants au niveau de la première fréquence spatiale et une ou plusieurs harmoniques de celle-ci, et la seconde sortie se répète avec la position au niveau d'une seconde fréquence spatiale qui est différente de la première fréquence spatiale, et dans lequel le moyen de détermination comprend :

un moyen pour échantillonner la première sortie lorsque la position varie à chaque fois que la valeur de la seconde sortie passe une position prédéterminée dans une période de la seconde sortie afin de générer une fonction échantillonnée ;
un moyen pour soustraire une fonction de référence de la fonction échantillonnée afin de générer une fonction de différence, dans lequel la fonction de référence correspond à une période unique de la première fonction de mesure ; et
un moyen pour déterminer les premières données d'étalonnage à partir de la fonction de différence.

Fig.1.

# Fig.2.

EP 2 881 715 B1

## Fig.3.

51
23
25

## Fig.5.

75b
27
77b 71 73
47a
75a
47c
77a
79
29

# Fig.4.

EP 2 881 715 B1

## Fig.6.

## Fig.8.

24

Fig.9.

# Fig.10.

# Fig.12.

Fig.11.

29

27

23

25

31

33

Fig.13.

EP 2 881 715 B1

## Fig.14.

EP 2 881 715 B1

## Fig.15.

FIG. 16

EP 2 881 715 B1

FIG. 17

FIG. 18

FIG. 19

FIG. 20

FIG. 21

FIG. 22

FIG. 23

FIG. 24

FIG. 26

FIG. 27

FIG. 25

Channel 1 Output Corrector

181a

Channel 1 Calibration Data

179a

From First ASIC

173a

Error Analyser

281

Channel 1 Calibration Data

From Second ASIC

173b

Channel 2 Calibration Data

179b

Absolute Position Calculator

171

Relative Position Calculator

183

Channel 2 Output Corrector

181b

EP 2 881 715 B1

38

FIG.28

FIG. 29

FIG. 30

FIG. 31

FIG. 32a

FIG. 32b

FIG. 33

FIG. 34

FIG. 35

FIG. 36

FIG. 37

43

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0216881 A
- WO 0216188 A
- WO 2006126013 A
- GB 2374424 A
- WO 9531696 A